# EUROPÄISCHE PATENTSCHRIFT

(11) **EP 1 982 964 B1**
(45) Veröffentlichungstag und Bekanntmachung des Hinweises auf die Patenterteilung: **27.02.2019**
(21) Anmeldenummer: 07106619.5
(22) Anmeldetag: 20.04.2007
(51) Int. Cl.: C04B 24/42, C04B 28/02, C04B 41/84, C08K 5/54, C08L 29/04, C09D 5/08, C08L 83/04

(54) **Organosiliciumverbindung enthaltende Mischung und deren Verwendung**
Preparation containing organosilicium compound and its use
Mélange comportant une liaison de silicium organique et son utilisation

(43) Veröffentlichungstag der Anmeldung: 22.10.2008
(73) Patentinhaber: Evonik Degussa GmbH, 45128 Essen (DE)
(72) Erfinder: Giessler-Blank, Sabine, 44227, Dortmund (DE); Standke, Burkhard, 79540, Lörrach (DE); Kehrer, Ulf, 65795, Hattersheim (DE)
(74) Vertreter: Evonik Patent Association

(56) Entgegenhaltungen:
- EP-A- 0 228 657
- EP-A- 0 811 584
- EP-A- 0 916 627
- EP-A- 1 205 481
- EP-A- 1 308 428
- FR-A- 2 870 851

## Beschreibung

Die vorliegende Erfindung betrifft die Verwendung von Mischungen basierend auf mindestens einem in Wasser löslichen organischen Polymer und einer Organosiliciumverbindung für den Schutz von Substraten vor Korrosion, Mischungen basierend auf mindestens einem in Wasser löslichen organischen Polymer und einer Organosiliciumverbindung sowie ein Verfahren zur Herstellung dieser Mischungen.

In der Chemie bezeichnet Korrosion die chemische Reaktion eines Werkstoffes mit Stoffen aus seiner Umgebung, wobei eine messbare Veränderung am Werkstoff eintritt. In der Regel ist der Werkstoff ein Metall. Der Begriff lässt sich aber auch auf andere Werkstoffe wie Glas, Beton, Mörtel und andere mineralische Baumaterialien anwenden. Es gibt verschiedene Arten von Korrosion, wie beispielsweise Sauerstoffkorrosion, welche die Bildung einer Oxidschicht wie beispielsweise Rost bewirkt, Wasserstoffkorrosion, auch Säurekorrosion genannt, Wasserstoffversprödung, Glaskorrosion, worunter man die strukturelle Veränderung der Oberfläche von Trinkgläsern und anderen Glasobjekten versteht und welche optisch durch einen nicht mehr entfernbaren milchiggrauen Schleier erkennbar ist, sowie bakterielle anaerobe Korrosion.

Um dieses Phänomen zu unterdrücken, gibt es eine Vielzahl von verschiedenen Korrosionsinhibitoren, welche insbesondere zum Schutz von Stahl in zementären Massen vorgeschlagen wurden. Einige sind auch pulverförmig und können in dieser Form oder als Lösung dosiert werden.

So beschreibt beispielsweise die EP 1 176 125 A1 aromatische Sulfonsäureverbindungen und deren Metallsalze zur Verwendung in Beton und speziell in Reparaturmörteln.

Die GB 1 153 178 beschreibt eine Kombination von wasserlöslichem Chromat, Nitrat oder Nitrit mit einem Salz aus einem aromatischen oder heterocyclischen Amin als Korrosionsinhibitor in Betonmassen. Insbesondere ist dabei von Nachteil, dass bei einem hohen Chloridgehalt im Beton ein vergleichsweise hoher Anteil an Nitrit oder Nitrat eingebracht werden muss, um effizient zu sein. Auch ist es nicht vorteilhaft, dass der Wirkstoff durch eine Abbaureaktion nach und nach verbraucht wird.

Des Weiteren beschreibt die JP 6 345 512 Metallpulver, wie Zn, Al, Mg, als Korrosionsinhibitor in Zement oder polymermodifiziertem Zement.

Alle diese Produkte eignen sich zwar als Korrosionsinhibitor zum Schutz von Stahl in zementären Massen, haben aber keinen oder keinen wesentlichen Einfluss auf die wasserabweisenden Eigenschaften von solchen Baustoffmassen.

Um dieser Anforderung gerecht zu werden, verwendet die US 20040103814 A1 eine Mischung aus Hydrophobierungsmittel, einen oder mehrere Alkanolamine, und optional Korrosionsinhibitoren, wobei spezifische Anforderungen an das Hydrophobierungsmittel gestellt werden. Allerdings sind diese Systeme flüssig und können somit nicht einer pulverförmigen Trockenmörtelmischung zudosiert werden. Zudem müssen sowohl Hydrophobierungsmittel wie auch Korrosionsinhibitoren zudosiert werden, um beide Funktionalitäten im Mörtel auszuüben.

Silane und Siloxane als Hydrophobierungsmittel sind schon über Jahrzehnte bekannt. Diese sind in aller Regel nur in flüssiger Form erhältlich und werden als Behandlungsmittel auf den ausgehärteten Beton aufgetragen. Da solche Mittel meist durch Sprühverfahren appliziert werden, benötigt man zudem häufig mehrere Applikationsschritte, um auf den angestrebten Produktverbrauch, d. h. den gewünschten Applikationsgrad zu gelangen. Dies ist nicht nur zeitintensiv, sondern man ist auch stark von den Wetterverhältnissen abhängig. So sollte es beispielsweise nicht regnen oder stark winden. Um größere Mengen auftragen zu können, wurden sogenannte "Cremes" entwickelt. Diese führen jedoch im Allgemeinen zu einem schlechten Eindringverhalten des Wirkstoffs in das Substrat, was sich insbesondere bei hochdichten Substraten wie Beton negativ auswirkt. Darüber hinaus kann bei Wirkstoffen mit höherem Oligomerisierungsgrad eine Verfärbung oder zumindest ein unerwünschter Glanz bzw. ein öliges Aussehen der Substratoberfläche auftreten, wobei dies durch das Nichteindringen von höheren Oligomeren in das Substrat verursacht wird.

Zudem erfordern Frost-Tausalze oder auch chloridhaltige maritime Umgebungen beim Betonschutz, speziell für Stahlbeton sowie für Stahlarmierungen, mehr als nur eine Hydrophobierung, da korrodierte Metalle in Baukörpern die Belastbarkeit von Bauwerken maßgeblich beeinträchtigen.

Aus EP 1 205 481 A2 sind Gemische von n-Propylethoxysiloxanen sowie deren Emulsionen für die Imprägnierung mineralischer Substratoberflächen bekannt. Diese Gemische werden in flüssiger Form auf die ausgehärteten Oberflächen aufgetragen, wobei oft ein mehrmaliger Auftrag notwendig, oder zumindest hilfreich ist.

In der EP 0 916 627 A1 wird ein Zusatzmittel für den Einsatz im Bauwesen beschrieben, bestehend aus Trinkwasser, Hydroxyethylcellulose, Antischaummittel, welches ein Silikon sein kann, und Titandioxid. Wenn es mit einem Bindemittel auf eine Oberfläche aufgetragen wird, kann diese Schicht Mörtel ersetzen und produziert auf einer Metalloberfläche eine Anti-Rost Isolierschicht. Pulverförmige Zubereitungen werden nicht beschrieben.

Die EP 1 308 428 A2 beschreibt die Verwendung flüssiger Silane bzw. Silanzubereitungen als Korrosionsinhibitor, wobei diese im Wesentlichen auf die Oberfläche des ausgehärteten Substrats aufgetragen werden. Silane und Silanzubereitungen in Pulverform werden nicht beschrieben.

EP 0 913 370 A1 offenbart ein Verfahren zur Herstellung eines homogen hydrophobierten Betons, auch Massenhydrophobierung genannt, wobei dadurch auch die Aufnahme von NaCI-Lösungen deutlich reduziert wird. Hierzu wird eine wässrige, hydrolysierbare Organosiliciumverbindungen enthaltende Emulsion zugesetzt, welche mindestens ein Alkoxysilan und gegebenenfalls eine als Tensid wirkende Organosiliciumverbindung enthält. Diese Systeme sind flüssig und können nicht ohne Weiteres in Pulverform überführt werden, was deren Lagerung und Transport, insbesondere bei Temperaturen unter dem Gefrierpunkt, erschwert. Zudem ist es nicht möglich, Trockenmörtel und/ oder pulverförmige Compounds für die Betonherstellung, enthaltend solche Systeme, herzustellen.

EP 0 228 657 A2 lehrt u. a. in Wasser redispergierbare bzw. wasserlösliche, wasserfreie Pulver, die auf mindestens einer organischen Siliciumverbindung basieren, als Zusätze zu Putzen, hydraulischen Bindemittel, Lehm oder Anstrichfarben, in Wasser gelöst zur Hydrophobierung von Schüttgütern oder als Bindemittel für feinteilige anorganische oder organische Stoffe zu verwenden. Die Verwendung dieser Pulver zur Hydrophobierung zementärer Systeme und/ oder zum Schutz der Systeme vor Korrosion, insbesondere von Metall, welches von mineralischen Baustoffen umgeben ist, wird nicht erwähnt. Zudem sind diese Pulver nicht problemlos herstellbar, was deren Produktion, Lagerung und Verwendung weiter erschwert.

Die FR 2 870 851 A bezieht sich auf ein in Wasser dispergierbares, Wasser abweisendes Mittel basierend auf wasserunlösliche und mit Wasser nicht vermischbare Wasser abweisende Mittel wie Polyorganosiloxane, welche zuvor mit einer wasserlöslichen amphiphilen Copolymer Zusammensetzung emulgiert werden. Diese Zusammensetzung kann durch Trocknung in eine feste Form überführt werden. Die Verwendung dieser Mittel zum Schutz von Systemen vor Korrosion, insbesondere von Metall, welches von mineralischen Baustoffen umgeben ist, wird nicht erwähnt.

In der EP 0 811 584 A1 werden zementäre Materialien in Pulverform erwähnt, enthaltend ein granuliertes hydrophobierendes Additiv, welches 5 bis 15 Gew.-% einer Organopolysiloxan Komponente, 10 bis 40 Gew.-% eines wasserlöslichen oder wasserdispergierbaren Bindemittels und 50 bis 80 Gew.-% eines Trägerpartikels enthält. Das zementäre Material bewirkt Hydrophobie. Es wird nicht erwähnt, dass diese Produkte zum Schutz vor Korrosion verwendet werden können. Nachteilig wirkt sich auch aus, dass das für die Hydrophobie hauptverantwortliche Organopolysiloxan nur in sehr geringen Mengen im Additiv vorhanden ist. Daher muss entsprechend eine größere Menge eingesetzt werden, was wiederum zu nachteiligen Effekten durch die anderen Komponenten, wie des Bindemittels und der Trägerpartikel, führen kann.

Leider sind all diese Maßnahmen zur Ausstattung und zum Erhalt von Bauwerken nicht ausreichend und genügen daher den hohen Anforderungen nicht. Insbesondere ist die Oberflächenbehandlung oder die Hydrophobierung von Bausteinen oder Bauwerken mit bisher bekannten Mitteln und Maßnahmen nicht hinreichend wirkungsvoll zur Reduktion der Korrosion der Materialien, insbesondere von Stahlarmierungen. Es ist wohl bekannt, dass, neben Spannungsrissen, zunächst insbesondere durch Umwelt- und Witterungseinflüsse die Bausubstanz rissig bzw. mürbe wird, wodurch in den Baukörper eindringende Stoffe zur weiteren Schädigung der Bauwerke führen.

Es stellte sich daher die Aufgabe, ein Material zum Schutz von Materialien vor Korrosion zur Verfügung zu stellen, welches insbesondere in Pulverform zu Trockenformulierungen zugegeben werden kann, aber auch als flüssige Zubereitung einsetzbar ist. Es ist wichtig, dass das Pulver leicht herstellbar sowie lagerstabil ist. Einer Trockenformulierung zugegeben, soll diese gut benetzbar sein und das Material soll sich gut dispergieren, redispergieren oder lösen, um eine schnelle und optimale Verteilung zu gewährleisten. Es ist wichtig, dass das Material in der mit Wasser angerührten Matrix seine Wirkung voll entfalten kann. Zudem soll es keine toxischen Eigenschaften besitzen und keine oder nur eine sehr geringe Interaktion mit der hydraulisch abbindenden Komponente eingehen, sodass beispielsweise keine Abbindeverzögerung der mineralisch abbindenden Komponente eintritt.
Diese komplexe Aufgabe konnte überraschenderweise gelöst werden durch die Verwendung
einer in Wasser dispergierbaren, redispergierbaren oder löslichen Mischung (nachfolgend auch kurz als Pulver bezeichnet), basierend auf mindestens einem in Wasser löslichen organischen Polymer und mindestens einer Organosiliciumverbindung,
für den Schutz von Substraten vor Korrosion. So wurde die Aufgabe erfindungsgemäß entsprechend den Angaben der Patentansprüche vorteilhaft gelöst.
Gegenstand der vorliegenden Erfindung ist daher eine in Wasser dispergierbare, redispergierbare oder lösliche Mischung sowie deren Verwendung für den Schutz von Substraten vor Korrosion, basierend auf
(i) mindestens einem in Wasser löslichen organischen Polymer und
(ii) mindestens einer Organosiliciumverbindung mit mindestens einer Si-O-Si-Bindung
wobei der Gehalt an organischem Polymer (i) etwa 40 bis etwa 80 Gew.-% bezogen auf die Summe des organischen Polymers (i) und der Organosiliciumverbindung (ii) beträgt, wobei die Organosiliciumverbindung ein Oligomerengemisch von Alkylalkoxysiloxanen ist, das Oligomerengemisch 50 bis 100 Gew.-% an Alkylalkoxysiloxanen enthält und diese im Wesentlichen einen Oligomerisierungsgrad von 2 bis 20 aufweisen, und wobei das Oligomerengemisch an Alkylalkoxysiloxanen der Summenformel

(R")Si(OR"')ₓO_{y} (I),

genügt, wobei Gruppen R" gleich oder verschieden sind und R" eine lineare, verzweigte oder cyclische Alkylgruppe mit 1 bis 18 C-Atomen darstellt, vorzugsweise Methyl, Ethyl, Propyl, Hexyl, Octyl, Hexadecyl, insbesondere n-Propyl, Gruppen R'" gleich oder verschieden sind und R'" für einen Wasserstoff oder eine lineare oder verzweigte Alkylgruppe mit 1 bis 4 C-Atomen steht, vorzugsweise Methyl, Propyl, Butyl, insbesondere Ethyl, und 1,0 < x < 2,0 und 0,5 < y < 1,0 sind mit der Maßgabe (2y + x) = 3.
Der Gehalt an organischen Polymer (i), bezogen auf die Summe des organischen Polymers (i) und der Organosiliciumverbindung (ii) beträgt bevorzugt von 40 und etwa 70 Gew.-%, insbesondere von 45 bis 60 Gew.-%.

Erfindungsgemäße Mischungen bzw. erfindungsgemäß verwendete Mischungen basierend bevorzugt auf mindestens einer Komponente (i) aus der Reihe Polyvinylacetat, Polyvinylalkohol, Polyvinylpyrrolidone, Stärken, Stärkederivate, Polyacrylate, Polymethylacrylate, Polymaleinate, in Wasser lösliche Celluloseether, in Wasser lösliche Polyethylenoxide, in Wasser lösliche Proteine - um nur einige Beispiele zu nennen. Man kann aber auch andere in Wasser lösliche Polymere als Komponente (i) einsetzen.
Als Komponente (ii) können eine überaus große Anzahl an Organosiliciumverbindungen eingesetzt werden, wobei im Rahmen der vorliegenden Erfindung "organofunktionell" mit "Organo" gleichgesetzt wird, was bedeutet, dass die Siliciumverbindung mindestens einen Substituenten mit mindestens einem Kohlenstoffatom besitzt. Bevorzugte Organosiliciumverbindungen werden dabei aus der Gruppe der organofunktionellen Silane, Polysilane, Silanester, Siloxane, Silikone und/oder Kieselsäureester ausgewählt. Insbesondere können die besagten Organosiliciumverbindungen als einzelne Komponenten, als Gemische aus mindestens zwei organofunktionellen Silanen, als Gemische aus mindestens zwei organofunktionellen Siloxanen oder als Gemische aus beispielsweise mindestens einem organofunktionellen Silan und mindestens einem organofunktionellen Siloxan eingesetzt werden.

Oft ist es von Vorteil, aber nicht zwingend, wenn die besagte Organosiliciumverbindung in flüssiger Form vorliegt und der Siedepunkt bei Normaldruck der eingesetzten Organosiliciumverbindung nicht zu niedrig, bevorzugt etwa 100 °C oder mehr, ist. Sie können in Wasser löslich, unlöslich oder nur teilweise löslich sein. Oft werden dabei Verbindungen bevorzugt, welche keine oder nur eine limitierte Wasserlöslichkeit besitzen, beispielsweise Kieselsäureester mit der Formel Si(OR')₄, Polysilane der Formel R₃Si(SiR₂)ₙSiR₃ mit R gleich n = 0 bis 500, wobei n = 0 bis 8 bevorzugt ist, Di -, Oligo- und Polysiloxane oder ihre Gemische der allgemeinen Formel bzw. Summenformel R_{c}H_{d}Si(OR')ₑ(OH)_{f}O_{(4-c-d-e-f)/2} mit c = 0 bis 3, d = 0 bis 2, e = 0 bis 3, f = 0 bis 3 und die Summe c+d+e+f höchstens 3.5 sein, wobei jeweils R' unabhängig für einen Alkyl- oder Alkoxyalkylenrest mit 1 bis 4 C-Atomen steht und vorzugsweise Methyl oder Ethyl bedeutet, Gruppen R gleich oder verschieden sind und verzweigte oder unverzweigte Alkylreste mit 1 bis 22 C-Atomen, Cycloakylreste mit 3 bis 10 C-Atomen, Alkylenreste mit 2 bis 4 C-Atomen, Aryl-, Aralkyl-, Alkylarylreste mit 6 bis 18 C-Atomen darstellen, wobei die genannten Reste R auch mit Halogenen, wie F oder Cl, mit Ether-, Thioether-, Ester-, Amid-, Nitril-, Hydroxyl, Amin-, Carboxyl-, Sulfonsäure-, Epoxid-, Carbonsäureanhydrid- und Carbonylgruppen substituiert sein können, wobei im Falle der Polysilane R auch die Bedeutung OR' haben kann.

Bevorzugte Organosiliciumverbindungen gemäß (ii) sind insbesondere Gemische von Alkylalkoxysiloxanen der Summenformel (R")Si(OR'")ₓO_{y} mit 0 < x < 2 und 0,5 < y < 1,5, vorzugsweise 1,0 < x < 2,0 und 0,5 < y ≤ 1,0 mit der Maßgabe (2y + x) = 3, und Gruppen R" gleich oder verschieden sind und R" eine lineare, verzweigte oder cyclische Alkylgruppe mit 1 bis 18 C-Atomen darstellt, ferner Gruppen R'" gleich oder verschieden sind und R'" für einen Wasserstoff oder eine lineare oder verzweigte Alkylgruppe mit 1 bis 4 C-Atomen steht, vorzugsweise für H, Methyl, Ethyl, Propyl.

Des Weiteren sind als Organosiliciumverbindungen gemäß (ii) bevorzugt Tetraalkoxysilane, Alkyltrialkoxysilane, Dialkyldialkoxysilane, wobei als Alkylgruppen lineare und/oder verzweigte C₁- bis C₂₀-Alkylgruppen und als Alkoxygruppen lineare und/oder verzweigte C₁- bis C₁₀- Alkoxygruppen vorliegen können, wobei als letztere bevorzugt Methoxy-, Ethoxy- und/ oder i-Propoxygruppen verwendet werden. Zudem kann anstelle einer Alkylgruppe auch eine copolymerisierbare Alkylengruppe, wie beispielsweise eine vinyl-, allyl- und/oder (meth)acryl- Gruppe, eingesetzt werden.

Nicht limitierende Beispiele von bevorzugten Organosiliciumverbindungen im Sinne der vorliegenden Erfindung sind organofunktionelle Silane bzw. Siloxane aus der Reihe der Alkoxysilane, wie Hydrogentrimethoxysilan, Hydrogentriethoxysilan, Tetramethoxysilan, Tetraethoxysilan,
der Alkylsilane, wie Methyltrimethoxysilan, Methyltriethoxysilan, Methyltripropoxysilan, Ethyltrimethoxysilan, Ethyltriethoxysilan, n- und i-Propyltrimethoxysilan, n- und i-Propyltriethoxysilan, n- und i-Butyltrimethoxysilan, n- und i-Butyltriethoxysilan, n- und i-Pentyltrimethoxysilan, n- und i-Pentyltriethoxysilan, n- und i-Hexyltrimethoxysilan, n- und i-Octyltrimethoxysilan, n- und i-Octyltriethoxysilan, Hexadecyltrimethoxysilan, Hexadecyltriethoxysilan, Octadecyltrimethoxysilan, Octadecyltriethoxysilan, Dimethyldimethoxysilan, Di-methyldiethoxysilan, n- und i-Butylmethyldimethoxysilan, n- und i-Butylmethyldiethoxysilan, Cyclohexylmethyldimethoxysilan, Diisopropyldimethoxysilan, Diisobutyldimethoxysilan und Isobutyl-Isopropyldimethoxysilan,
der Vinylsilane, wie Vinyltrimethoxysilan, Vinyltriethoxysilan, Vinylmethyldialkoxysilan und Vinyltris-(2-Methoxyethoxysilan),
der Aminoalkoxysilane, wie 1-Aminomethyltrimethoxysilan, 1-Aminomethyltriethoxysilan, 2-Aminoethyltrimethoxysilan, 2-Aminoethyltriethoxysilan, 3-Aminopropyltrimethoxysilan, 3-Aminopropyltriethoxysilan, 3-Aminoisobutyltrimethoxysilan, 3-Aminoisobutyltriethoxysilan, N-(n-Butyl)-3-aminopropyltrimethoxysilan, 3-Aminopropylmethyldiethoxysilan, 3-Ureidopropyltrimethoxysilan, 3-Ureidopropyltriethoxysilan, N-Aminoethyl-3-aminopropyltrimethoxysilan, N-Aminoethyl-3-aminopropyltriethoxysilan, Triaminofunktionelles Propyltrimethoxysilan und 3-(4,5-Dihydroimidazolyl)-propyltriethoxysilan, der Glycidether- bzw. Glycidylalkylfunktionellen Alkoxysilane, wie 3-Glycidyloxypropyl-trimethoxysilan und 3-Glycidyloxypropyltriethoxysilan,
der Chlor- und Fluoralkyl-funktionellen Alkoxysilane, wie Tridecafluorooctyltriethoxysilan und Tridecafluorooctyltrimethoxysilan, 3-Chlorpropyltriethoxysilan der Acryl- oder Methacrylfunktionellen Alkoxysilane, wie Acryloxypropyltrimethoxysilan, Acryloxypropyltriethoxysilan, 3-Methacryloxypropyltrimethoxysilan, 3-Methacryloxypropyltriethoxysilan, 3-Methacryloxyisobutylltrimethoxysilan, 3-Methacryloxyisobutyltriethoxysilan, 3-Methacryloxy-2-methyl-propyltrimethoxysilan und 3-Methacryloxy-2-methyl-propyltriethoxy-silan, der Mercapto-funktionellen Alkoxysilane, wie 3-Mercaptopropyltrimethoxysilan und 3-Mercaptopropyltriethoxysilan, der Sulfan- oder Polysulfanfunktionellen Alkoxysilane, wie Bis-(triethoxysilylpropyl)-tetrasulfan, Bis-(trimethoxysilylpropyl)-tetrasulfan, Bis-(triethoxysilylpropyl)-disulfan, Bis-(trimethoxysilylpropyl)-disulfan, Bis-(triethoxysilylpropyl)-sulfan, Bis-(trimethoxysilypropyl)-sulfan, Bis-(triethoxysilylpropyl)-pentasulfan und Bis-(trimethoxysilylpropyl)-pentasulfan, wobei in den zuvor genannten monomeren Organosilanen entsprechende, durch Hydrolyse bedingte Oligomere in einer Konzentration von 0,001 bis 5 %, bezogen auf die Zusammensetzung, vorliegen können,
weitere Organosiliciumverbindungen wie beta-Nitrilethyltriethoxysilan, Arylsilane, insbesondere Phenyltriethoxysilan, aber auch Dipropyldiethoxysilan, Triphenylsilanol sowie deren vorzugsweise flüssigen Kondensationsprodukte, quartäre Ammoniumsalzgruppen enthaltende Silane, insbesondere von Amino-funktionellen Silanen bzw. Siloxanen, Carbonsäure- und Carbonsäureanhydrid-funtionelle Silane, Disilane wie Dimethyltetraalkoxydisilan, Tetramethyldialkoxydisilan, Trimethyltrialkoxydisilan oder deren im Allgemeinen aus den entsprechenden Chlorverbindungen erhältlichen (Co)kondensate. Bevorzugt sind auch durch Trimethylsiloxygruppen endblockierte Methylhydrogenpolysiloxane, durch Trimethyl-siloxygruppen endblockierte Mischpolymere aus Dimethylsiloxan- und Methylhydrogensiloxan-Einheiten und in den endständigen Einheiten je eine Si-gebundene Hydroxylgruppe aufweisende Dimethylpolysiloxane sowie der organofunktionellen Siloxane, wie Vinyl-funktionelle Siloxane, Alkyl-funktionelle Siloxane, Vinyl-/Alkyl-funktionelle Siloxane (Cokondensate), Methacryl-funktionelle Siloxane, Amino-funktionelle Siloxane, Aminoalkyl-/Alkyl-funktionelle Siloxane, Aminoalkyl-/Fluoralkyl-funktionelle Siloxane oder entsprechende Cokondensate sowie Kondensate, wie sie beispielsweise, aber nicht ausschließlich, aus EP 0 590 270 A, EP 0 716 127 A, EP 0 716 128 A, EP 0 748 357 A, EP 0 760 372 A, EP 0 814 110 A, EP 0 879 842 A, EP 0 846 715, EP 0 930 342 A, EP 1 101 787 A, EP 1 205 481 A, EP 1 304 345 A, WO 06/081891, WO 06/081892, WO 06/010666, DE 196 49 953 A, DE 196 49 955 A, DE 197 25 516 A, DE 198 18 923 A, DE 198 23 390 A, DE 198 34 990 A,
DE 198 49 308 A, DE 199 04 132 A, DE 199 08 636 A sowie DE 100 56 344 A zu entnehmen sind, oder oligomere Kieselsäureester, beispielsweise Dynasylan® 40 oder solche aus DE 27 44 726 C sowie DE 28 09 871 C, einschließlich Hydrogencyclosiloxane, beispielsweise so genannte DₙH-Verbindungen mit einem Oligomerisierungsgrad von n = 2 bis 20, insbesondere von n = 4 bis 6.

Die Herstellung der genannten Organosiliciumverbindungen kann aber auch nach Verfahren erfolgen wie sie in Noll, Chemie und Technologie der Silicone, 2. Auflage 1968, Weinheim und Houben-Weyl, Methoden der organischen Chemie, Band E 20, S. 1782 f, 2219 f, Georg Thieme Verlag, Stuttgart, 1987 beschrieben sind.

Erfindungsgemäß kann eine vorliegende Mischung in einfacher und wirtschaftlicher Weise während der Herstellung von mineralischen Baustoffen zugesetzt werden. Insbesondere kann man vorliegende Mischungen bzw. Pulver vorteilhaft bei der Zubereitung von Baustoffmassen aus den Einzelkomponenten bzw. Zusatzstoffen oder anwendungsfertiger Baustoffmischen vor Ort, d. h. direkt am Ort der anschließenden Verarbeitung der Baustoffmasse, oder bei der Herstellung anwendungsfertiger, pulverförmiger Baustoffmischungen, beispielsweise Beton-, Putz- oder Mörtelmischungen, oder bei der Herstellung anwendungsfertiger, pulverförmiger Zusatzstoffe für Baustoffmassen, beispielsweise Zement, Kalk, Sand oder Rheologiehilfsstoffe, einbringen bzw. beimischen.

Die erfindungsgemäße Verwendung der vorliegenden Mischungen schützt Substrate, insbesondere Metall, und/oder natürliche und/oder künstlich hergestellte mineralische Baustoffe vor Korrosion. Bevorzugte Metalle sind Eisen und Eisenlegierungen, insbesondere Stahl sowie Aluminium und Aluminiumlegierungen. Das Metall ist in der Regel von mineralischen Baustoffen umgeben, beispielsweise Stahlarmierungen in Beton. Bevorzugte Baustoffe sind Mörtel, Beton, Putze, Fugenmassen, Ziegelmaterial, Mauersteine, Bausteine, Bauteile und/oder Naturstein, wie Kalksandstein.

Bevorzugt werden erfindungsgemäße Mischungen in und/oder auf mineralischen Baustoffen verwendet, welche mit Metall in Berührung stehen, Metall umhüllen oder einschließen. Ganz besonders bevorzugt werden mineralische Baustoffe wie Beton, insbesondere Stahlbeton, Porenbeton, Gasbeton, Schaumbeton, Fertigbauteile aus Beton, Mörtel, Putze, Fugenmassen, Bauteile aus Kalksandstein, Klinker, Ziegel, poröse Fliesen und Kacheln, Terrakotta, Natursteine, Faserzemente, Estriche, Tonartikel, Mauerwerke, Fassaden, Dächer sowie Bauwerke, wie Brücken, Hafenanlagen, Wohngebäude, Industriegebäude und öffentlich genutzte Gebäude, wie Parkhäuser, Bahnhöfe oder Schulen, aber auch Fertigteile, wie Bahnschwellen oder L-Steine.

Die künstlich herzustellenden mineralischen Baustoffe enthalten in der Regel ein mineralisches Bindemittel, welches mindestens a) ein hydraulisch abbindendes Bindemittel, insbesondere Zement, b) ein latent hydraulisches Bindemittel, insbesondere saure Hochofenschlacke, Puzzolane und/ oder Metakaolin, und/oder c) ein nicht-hydraulisches Bindemittel, welches unter Einfluss von Luft und Wasser reagiert, insbesondere Calciumhydroxid und/ oder Calciumoxid, verwendet.

Als hydraulisch abbindendes Bindemittel ist Zement, insbesondere Portlandzement, beispielsweise nach EN 196 CEM I, II, III, IV und V, Calciumsulfat in Form von alpha- und/oder beta-Halbhydrat und/oder Anhydrit, und/oder Tonerdeschmelzzement bevorzugt. Als latent hydraulische Bindemittel können Puzzolane, wie Metakaolin, Calciummetasilikat und/oder vulkanische Schlacke, vulkanischer Tuff, Trass, Flugasche, Hochofenschlacke und/oder Silicastaub eingesetzt werden, welche zusammen mit einer Calciumquelle, wie Calciumhydroxid und/oder Zement, hydraulisch reagieren. Als nicht-hydraulisches Bindemittel, welches unter Einfluss von Luft und Wasser reagiert, kann insbesondere Kalk, meist in der Form von Calciumhydroxid und/oder Calciumoxid, eingesetzt werden. Bevorzugt werden vor allem rein Portlandzement-basierte Systeme oder eine Mischung aus Portlandzement, Tonerdeschmelzzement und Calciumsulfat, wobei bei beiden Systemen gegebenenfalls noch latent hydraulische und/oder nicht-hydraulische Bindemittel zugesetzt werden können.

Oft sind Bindemittel oder Bindemittelkombinationen bevorzugt, welche mit Wasser zusammen einen hohen pH-Wert erzeugen. Dies bewirkt, wenn in Kontakt mit einem Metall, an dessen Oberfläche eine oxidierte Passivschicht, an welche die Organosiliciumverbindung anbinden kann.

Die mineralischen Bindemittel werden typischerweise mit Zuschlagstoffen, welche manchmal auch Füllstoffe genannt werden, vermischt. Typische Zuschlagstoffe sind quarzitische und/oder carbonatische Sande und/oder Mehle wie beispielsweise Quarzsand und/oder Kalksteinmehl, Carbonate, Silikate, Kreide, Schichtsilikate und/oder gefällte Kieselsäuren. Des Weiteren können Leichtfüllstoffe, wie beispielsweise Mikrohohlkugeln aus Glas, Polymere, wie Polystyrolkugeln, Alumosilikate, Siliziumoxid, Aluminium-Siliziumoxid, Calcium-Silikathydrat, Aluminium-Silikat, Magnesium-Silikat, Aluminium-Silikathydrat, Calcium-Aluminium-Silikat, Calcium-Silikathydrat Siliziumdioxid und/oder Aluminium-Eisen-Magnesium-Silikat, aber auch Tone wie Bentonit verwendet werden, wobei die Füllstoffe und/oder Leichtfüllstoffe auch eine natürliche oder künstlich erzeugte Farbe aufweisen können.

Werden als Organosiliciumverbindung hydrophobierend wirkende Silanprodukte eingesetzt, können zudem durch den erzielten Hydrophobierungseffekt die Korrosionseigenschaften so ausgestatteter Baustoffe und Bauwerke mit entsprechender Stahl- bzw. Metallarmierungen - auch gegenüber marktgängigen Korrosionsschutzmaßnahmen - nochmals deutlich verbessert werden.

Überraschenderweise wurde ebenfalls gefunden, dass die Mischung neben der erfindungsgemäßen Verwendung als Korrosionsinhibitor auch zur Steinverfestigung eingesetzt werden kann, wobei hydrophobe Eigenschaften und Wirkungen unbeschadet bleiben.
Insbesondere ist überraschend, dass man neben einer hydrophobierenden und/oder steinverfestigenden Wirkung von Mitteln, die organofunktionelle Silane und/oder organofunktionelle Siloxane enthalten, gleichzeitig eine korrosionshemmende Wirkung, insbesondere von Metallkorrosion bzw. Korrosion bei Beton, der mit Wasser und Salzen in Kontakt kommt, durch den Einsatz zuvor genannter Pulver in Reparaturmassen oder in Massen für die Erstellung von Bausteinen, Bauteilen bzw. Bauwerken vorteilhaft erzielen kann. Somit beinhaltet die erfindungsgemäße Verwendung in vorteilhafter Weise auch die gleichzeitige Vermeidung von Metall- und Steinkorrosion.
Darüber hinaus sind bei Applikation eines erfindungsgemäßen Pulvers in solchen Massen gute und insbesondere gleichmäßige steinverfestigenden Eigenschaften am späteren Baukörper festzustellen. Auch bleiben hydrophobe Eigenschaften und Wirkungen unbeschadet.
Ferner ist es vorteilhaft, wenn man ein oben näher bezeichnetes Pulver bzw. Mischungen erfindungsgemäß für die Herstellung von mineralischen Massen für Reparaturzwecke im Baubereich verwendet. Auch durch eine solche Applikation kann ein Korrosionsprozess zumindest im zeitlichen Verlauf deutlich gemildert werden.
Eine erfindungsgemäße Schutzwirkung vor Korrosion wird erreicht wenn die Korrosionsgeschwindigkeit um mehr als etwa 50 %, bevorzugt um mehr als etwa 80 %, insbesondere um mehr als etwa 90 %, reduziert wird im Vergleich zu ungeschützten Materialien. Die Korrosionsgeschwindigkeit wird beispielsweise bei Stahlarmierung durch die beobachteten Korrosionsströme gegenüber entsprechendem ungeschütztem Beton bestimmt.
Die Einsatzmengen einer erfindungsgemäßen Mischung im Beton, bezogen auf den Feststoffgehalt der Mischung und den Zementanteil im Beton, kann bis Gew.-% oder mehr betragen, wobei darauf zu achten ist, dass allfällige Normvorschriften eingehalten werden. Bevorzugt werden die Einsatzmengen so eingestellt, dass ein für die erfindungsgemäße Verwendung optimaler Korrosionsschutz erhalten wird. Somit kann ein hoher Wirkstoffgehalt an Organosiliciumverbindung eingesetzt werden, ohne die anderen Betoneigenschaften wesentlich zu beeinflussen, wobei auch die Baurichtlinien problemlos eingehalten werden können.
Die Einsatzmengen einer erfindungsgemäßen Mischung in Mörteln, bezogen auf den Feststoffgehalt der Mischung und den Trockenanteil des Mörtels, beträgt von 0,1 bis 10 Gew.-%, wobei für Spezialanwendungen auch höhere Mengen eingesetzt werden können. Bevorzugt werden 0,1 bis 3 Gew.-% der Mischung eingesetzt.
Die erfindungsgemäßen Mischungen, die überraschenderweise gut als Korrosionsinhibitoren wirken, werden typischerweise in hydraulisch abbindende Massen eingearbeitet, wobei sie während der Herstellung der mineralischen Baustoffe in der Regel zusammen mit den anderen Komponenten zugesetzt werden.
Erfindungsgemäße Mischungen liegen in der Regel in Pulverform vor. So können sie in besonders einfacher und wirtschaftlicher Weise in entsprechende Trockenmörtel, Trockenputze und/oder Trockenvormischungen für Beton, wie beispielsweise Zement, insbesondere modifizierte Zemente, verarbeitet werden. Dies ermöglicht eine besonders gute Dosierung und eine sehr gleichmäßige Verteilung der Mischung in der späteren Baustoffmasse und damit auch in den nachfolgend hergestellten Bausteinen, Bauteilen und dem dadurch erhaltenen Bauwerk. Diese Trockenmischungen können dann einfach vor Ort unter Zusatz einer definierten Menge an Wasser vermischt werden und anschließend verarbeitet werden.
Man kann eine erfindungsgemäße Mischung aber auch bei der Zubereitung der Baustoffmasse als gesonderte Komponente beimischen. Bei dieser Ausführungsform ist es oft vorteilhaft, wenn man die Baustoffkomponenten mit der nötigen Menge Wasser mischt bzw. knetet, wobei die Mischung direkt vor, während und/oder nach der Zugabe von Wasser zugegeben wird. Man kann aber auch die Mischung zuerst dem Anmachwasser zugeben und auf diese Weise zu der trockenen oder bereits feuchten Masse im Mischer geben.

Die besagten Mischungen können aber auch oberflächlich in gelöster, vorzugsweise niedrigviskoser bis hochviskoser Form, d. h. pastöser Form, auf die erhaltenen Baustoffe als Oberflächenschutz beispielsweise durch Sprühen, Streichen, Rollen oder Rakel aufgetragen werden. Dabei kann man die vorliegende Zusammensetzung bzw. Zubereitung in einer Menge von mehr als 50 g/m², vorzugsweise mehr als 100 g/m², besonders vorzugsweise mehr als 200 g/m², auf die Substratoberfläche auftragen. Gegebenenfalls kann eine Mehrfachapplikation mit einer Trocknungszeit von beispielsweise 2 Stunden bis ca. 2 Tagen zwischen den Arbeitsgängen angebracht sein, insbesondere wenn die gewünschte Wirkstoffmenge aufgrund einer nur geringen Saugfähigkeit des Substrats nicht in einem Arbeitsgang aufgebracht werden kann. Wird eine besagte Mischung als Pulver verwendet, so ist es für diese Anwendung von Vorteil, wenn das Pulver vorgängig in Wasser dispergiert, redispergiert oder gelöst wird; dazu kann man aber auch andere, bei Umgebungstemperatur verdunstende Flüssigkeiten verwenden.

Als Organosiliciumverbindung gemäß (ii) mit mindestens einer Si-O-Si Bindung kann man ebenfalls vorteilhaft solche gemäß der oben offenbarten Komponente (ii), insbesondere Organosiloxane wie Alkylalkoxysiloxane bzw. Alkylalkoxysiloxangemische einsetzen bzw. als Ausgangsmaterial bei die Herstellung erfindungsgemäßer Mischungen bzw. Pulver verwenden, und/oder oligomere Kieselsäureester verwenden bzw. einsetzen. Es ist auch möglich, eine Mischung verschiedener Organosiliciumverbindungen zu verwenden.

So wird man es für die erfindungsgemäßen Mischungen und die Mischung für die erfindungsgemäße Verwendung in der Regel bevorzugen, wenn die Organosiliciumverbindung bei Raumtemperatur und Normaldruck eine Flüssigkeit ist. Insbesondere für erfindungsgemäße Pulver ist es vorteilhaft, wenn der Siedepunkt der Organosiliciumverbindung bei Normaldruck etwa 100 °C oder höher, bevorzugt etwa 125 °C oder höher, insbesondere etwa 150 °C oder höher, beträgt.

Ist die Organosiliciumverbindung bei Raumtemperatur und Normaldruck eine Flüssigkeit, kann die Viskosität je nach Verbindung sehr niedrig, aber auch sehr hoch sein. Für die erfindungsgemäßen Mischungen und Verwendung ist es jedoch oft vorteilhaft, wenn niederviskose Organosiliciumverbindungen eingesetzt werden. Vorzugsweise besitzen sie eine Viskosität von etwa 1 bis 1000 mPa s, besonders bevorzugt von etwa 2 bis 200 mPa s, insbesondere von etwa 3 bis 50 mPa s, und ganz besonders bevorzugt von etwa 3 bis etwa 20 mPa s. Die Viskositätsmessung erfolgt im Allgemeinen nach DIN 53 015.

Oligomere Silane bzw. Organosiloxane wie Alkylalkoxysiloxane werden in der Regel über ihren Oligomerisierungsgrad sowie durch ihre Struktur charakterisiert. Dies wird am Beispiel von n-Propylethoxysiloxanen und ihrer Gemische nachfolgend näher erläutert. Man kann diese Organosiliciumverbindungen durch folgende allgemeine Strukturformeln näherungsweise darstellen: 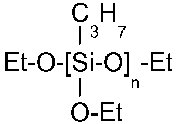 für lineare n-Propylethoxysiloxane und 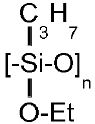 für cyclische n-Propylethoxysiloxane,
wobei n den Oligomerisierungsgrad angibt. D. h., der Oligomerisierungsgrad spiegelt die Anzahl der Si-Einheiten pro Molekül wieder. Zur Bestimmung des Oligomerisierungsgrades wurden für vorliegende Arbeiten die Gelpermeationschromatographie (GPC-Methode) und die ²⁹Si-NMR-Methode eingesetzt. Sofern hier ein Oligomerengemisch mit beispielsweise 100 Gew.-%, bezogen auf wohl definierte Oligomere, angegeben wird, bezieht sich diese Angabe auf die heutige Nachweisgrenze (ca. 1 %) entsprechender Oligomerer mit besagten Methoden. Auch können Oligomere mit verzweigten Strukturen vorliegen, die jedoch schwieriger abzubilden sind.

Um besagte Siloxane eingehender beschreiben zu können, wird bei der vorliegenden Anmeldung zusätzlich auf sogenannte M-, D- und T-Strukturen zurückgegriffen. Zur Nomenklatur der Benennung solcher Siloxanstrukturen sei auf das "Römpp Chemielexikon" - Stichwort: Silicone - hingewiesen.
Besonders vorzugsweise setzt man bei der vorliegenden Erfindung gemäß Komponente (ii) ein n-Propylethoxysiloxangemisch ein, beispielsweise Protectosil® 266.
Zudem kann es vorteilhaft sein, wenn ein erfindungsgemäß eingesetztes Oligomerengemisch im Wesentlichen 70 bis 100 Gew.-%, vorzugsweise 80 bis 99 Gew.-%, insbesondere 90 bis 98 Gew.-%, an Alkylalkoxysiloxanen mit einem Oligomerisierungsgrad von 2 bis 20, besonders vorzugsweise 2 bis 10, insbesondere 3 bis 6, enthält. Solche Oligomerengemische können aber auch entsprechende monomere Alkylalkoxysilane enthalten.

Insbesondere können besagte Oligomerengemische der Komponente (ii) folgende Anteile an Alkylalkoxysiloxanen, insbesondere n-Propylethoxysiloxane, enthalten, wobei sich die Angaben jeweils zu 100 Gew.-% durch weitere Komponenten, insbesondere andere Alkylalkoxysiloxane, aber gegebenenfalls auch Restmengen an Wasser und/oder Alkohol bis ≤ 5 Gew.-%, vorzugsweise ≤ 2 Gew.-%, insbesondere ≤ 1 Gew.-% bis hin zur Nachweisgrenze, ergänzen:
- 0 bis 30 Gew.-%, besonders bevorzugt weniger als 10 Gew.-%, ganz besonders bevorzugt 0,001 bis weniger als 5 Gew.-%, insbesondere 0,01 bis weniger als 1 Gew.-%, an Alkylalkoxysiloxanen mit einem Oligomerisierungsgrad von n gleich 2, welche eine M₂-Struktur besitzen,
- 8 bis 40 Gew.-%, besonders bevorzugt 10 bis 35 Gew.-%, ganz besonders bevorzugt 15 bis 30 Gew.-%, an Alkylalkoxysiloxanen, welche eine M₂D- und/oder D₃-Struktur besitzen, wobei die besagten Strukturen je einer Molmasse eines Alkylalkoxysiloxans mit dem Oligomerisierungsgrad n gleich 3 entsprechen,
- 20 bis 60 Gew.-%, besonders bevorzugt 25 bis 55 Gew.-%, ganz besonders bevorzugt 35 bis 50 Gew.-%, insbesondere 30 bis 45 Gew.-%, an Alkylalkoxysiloxanen, welche eine M₂D₂- und/oder M₃T- und/oder D₄-Struktur besitzen, wobei die besagten Strukturen je einer Molmasse eines Alkylalkoxysiloxans mit dem Oligomerisierungsgrad n gleich 4 entsprechen,
- 5 bis 35 Gew.-%, besonders bevorzugt 8 bis 30 Gew.-%, ganz besonders bevorzugt 15 bis 25 Gew.-%, insbesondere 10 bis 24 Gew.-%, an Alkylalkoxysiloxanen, welche eine M₂D₃- und/oder M₃DT- und/oder D₅-Struktur besitzen, wobei welche besagten Strukturen je einer Molmasse eines Alkylalkoxysiloxans mit dem Oligomerisierungsgrad n gleich 5 entsprechen,
- 0,1 bis 30 Gew.-%, besonders bevorzugt 0,5 bis 25 Gew.-%, ganz besonders bevorzugt 5 bis 20 Gew.-%, an Alkylalkoxysiloxanen, welche eine M₂D₄- und/oder M₃D₂T- und/oder M₄T₂- und/oder D₆-Struktur besitzen, wobei die besagten Strukturen je einer Molmasse eines Alkylalkoxysiloxans mit einem Oligomerisierungsgrad von n gleich 6 entsprechen.

Ein Oligomerengemisch von Alkylalkoxysiloxanen enthaltende Mischung im Sinne von Komponenten (ii) der vorliegenden Erfindung kann beispielsweise - aber nicht ausschließlich - nach der Lehre der EP 1 205 481 A2 hergestellt werden. Darüber hinaus kann auch eine dort genannte Zusammensetzung einschließlich der dort genannten Zusätze bei der vorliegenden Erfindung eingesetzt werden. Der Offenbarungsgehalt der EP 1 205 481 A2 ist im vollen Umfang der vorliegenden Beschreibung hinzuzurechnen.

Ein erfindungsgemäß verwendetes bzw. zur Herstellung der Pulver eingesetztes Oligomerengemisch von Alkylalkoxysiloxanen, wie Protectosil® 266, kann beispielsweise - aber nicht ausschließlich - folgende physikalisch-chemische Eigenschaften und folgende Oligomerenverteilungen aufweisen:

| | | | | |
|---|---|---|---|---|
| Flammpunkt | (EN 22719) | : | > 70 | °C |
| Viskosität | (20 °C, DIN 53015) | : | 35 | mPa s |
| Dichte | (20 °C, DIN 51757) | : | 1,04 | g/cm³ |
| Wassergehalt | | : | ≤ 0,05 | % |
| Freier Alkohol | | : | ≤ 0,3 | % |

| Oligomerisierungsgrad (Strukturtypen) | Anteil in Gew.-% |
|---|---|
| 3 (M₂D, D₃) | 25 |
| 4 (M₂D₂, M₃T, D₄) | 33 |
| 5 (M₂D₃, M₃DT, D₅) | 14 |
| 6 (M₂D₄, M₃D₂T, M₄T₂, D₆) | 23 |

Ebenfalls kann ein besagtes Oligomerengemisch von Alkylalkoxysiloxanen der Komponente (ii) weniger als 10 Gew.-%, bevorzugt 0 bis 8 Gew.-%, besonders bevorzugt von 0,001 bis weniger als 5 Gew.-%, an Alkylalkoxysiloxanen mit einem höheren Oligomerisierungsgrad als 6 enthalten, wobei die Mengenangaben auf das Oligomerengemisch bezogen sind.

Ferner kann ein Oligomerengemisch in Sinne der Komponente (ii) 0 bis weniger als 5 Gew.-% an Alkylalkoxysiloxanen, welche einen Oligomerisierungsgrad von n gleich 7 bis 20 aufweisen, enthalten, wobei die Mengenangabe auf das Oligomerengemisch bezogen ist.

Auch ist es geeignet, wenn ein besagtes Oligomerengemisch von Alkylalkoxysiloxanen gemäß Komponente (ii) 0 bis weniger als 1 Gew.-% an Alkylalkoxysiloxanen enthält, wobei diese einen höheren Oligomerisierungsgrad als n gleich 20 aufweisen.

Erfindungsgemäß als Komponente (ii) verwendete Oligomerengemische von Alkylalkoxysiloxanen enthalten jedoch im Wesentlichen solche Alkylalkoxysiloxane mit einem Oligomerisierungsgrad von n gleich 2 bis 6, besonders bevorzugt nur solche mit n gleich 3 bis 6.

Allgemein ist es vorteilhaft, wenn erfindungsgemäße Mischungen einen niedrigen Anteil an flüchtigen organischen Verbindungen (VOC) besitzen, wobei als Verbindungen darunter fallen, welche einen Siedepunkt bei Normaldruck von höchstens 250 °C besitzen. Der VOC Gehalt beträgt, bezogen auf den Feststoffanteil, bevorzugt weniger als 2 Gew.-%, bevorzugt weniger als 0,5 Gew.-% und insbesondere weniger als 0,2 Gew.-%.

Es ist jedoch möglich, dass eine Mischung neben einem Oligomerengemisch von Alkylalkoxysiloxanen auch geringe Mengen an freiem Alkohol enthält. Ein solcher Anteil an freiem Alkohol im Pulver kann beispielsweise bei Gegenwart vergleichweise hoher Luftfeuchtigkeit durch Hydrolyse von Alkoxygruppen nach und nach gebildet wird. Die Mengenanteile betragen 0 bis weniger als 5 Gew.-%, vorzugsweise weniger als 2 Gew.-%, ganz besonders bevorzugt weniger als 1 Gew.-%, freier Alkohol, bezogen auf die Menge an Organosiliciumverbindung im Pulver.

Für die erfindungsgemäßen Mischungen und die Mischung für die erfindungsgemäße Verwendung ist es bevorzugt, wenn die Organosiliciumverbindung nicht oder nur begrenzt wasserlöslich, eine wässrige Dispersion, ein in Wasser dispergierbares oder redispergierbares Pulver ist. Wird eine gut wasserlösliche Organosiliciumverbindung eingesetzt, so ist sie bevorzugt ein in Wasser lösliches Pulver. Zudem kann die Mischung, unabhängig von der Wasserlöslichkeit der Organosiliciumverbindung, ein granuliertes Pulver sein, bei dem das in Wasser lösliche organische Polymer und die Organosiliciumverbindung auf eine anorganische Matrix aufgezogen und/oder adsorbiert wird, wobei bei der Auswahl der anorganischen Matrix darauf geachtet werden soll, dass sich die aufgezogenen und/oder adsorbierten Verbindungen bei der erfindungsgemäßen Verwendung einfach wieder von der Matrix ablösen, um die Wirkung zu entfalten.

Es ist hilfreich, dass das in Wasser lösliche organische Polymer mit der Organosiliciumverbindung, sofern diese in Wasser unlöslich oder nur begrenzt löslich ist, in wässriger Lösung eine stabile Dispersion bildet. Oft ist es vorteilhaft, wenn die Verbindungen so aufeinander abgestimmt werden, dass die erhaltene Dispersion auch nach 24 Stunden noch die gleichen physikalischen Eigenschaften wie beispielsweise pH, Viskosität, Teilchengrösse und Farbe besitzt sowie dass keine Separierung, d. h. Absetzen von Dispersionspartikeln, auftritt. Da je nach Art der Organosiliciumverbindung verschiedene in Wasser lösliche organische Polymere die gewünschte Dispersionsstabilität ergeben, kann ein in Wasser lösliches organisches Polymer für bestimmte Organosiliciumverbindung ideal sein, während mit anderen Organosiliciumverbindungen eine Inkompatibilität auftreten kann. Deshalb muss das in Wasser lösliche organische Polymer auf die Organosiliciumverbindung abgestimmt werden. Bevorzugt sind Stabilisierungssysteme, welche es auf einfache Art erlauben, die erhaltene wässrige Dispersionszusammensetzung mittels Trocknung in Pulver zu überführen, welche in Wasser redispergierbar sind.

Typischerweise geeignete in Wasser lösliche organische Polymere sind bei Raumtemperatur, sofern nicht gelöst, Festkörper und bevorzugt höhermolekulare Verbindungen. Darunter fallen natürliche Verbindungen wie Polysaccharide, welche gegebenenfalls chemisch modifiziert sind, synthetische höhermolekulare Oligomere sowie Polymerisate die keinen oder nur einen schwach ionischen Charakter haben, und/oder Polymerisate, welche mittels Monomeren, die zumindest zum Teil ionischen Charakter haben, beispielsweise mittels radikalischer Polymerisation in wässrigem Medium in-situ hergestellt werden. Es ist auch möglich, dass nur ein in Wasser lösliches organisches Polymer verwendet wird, oder verschiedene Polymere miteinander kombiniert werden. Oft ist es jedoch hilfreich, wenn das in Wasser lösliche organische Polymer keine oder nur einen geringen Anteil an Carboxylgruppen aufweist.
Bevorzugt einsetzbare Polysaccharide und deren Derivate sind kaltwasserlösliche Polysaccharide und Polysaccharidether, wie Celluloseether, Stärkeether (Amylose und/oder Amylopectin und/oder deren Derivate), Guarether und/oder Dextrine. Es können auch synthetische Polysaccharide wie anionische, nonionische oder kationische Heteropolysaccharide, insbesondere Xanthan Gum oder Wellan Gum verwendet werden. Die Polysaccharide können, müssen aber nicht, chemisch modifiziert sein, beispielsweise mit Carboxymethyl-, Carboxyethyl-, Hydroxyethyl-, Hydroxypropyl-, Methyl-, Ethyl-, Propyl-, Sulfat-, Phosphat- und/oder langkettigen Alkylgruppen. Weitere natürliche Stabilisierungssysteme sind Alginate, Peptide und/oder Proteine wie beispielsweise Gelatine, Casein und/oder Soja-Protein. Ganz besonders bevorzugt sind Dextrine, Stärke, Stärkeether, Casein, Soja-Protein, Gelatine, Hydroxyalkyl-Cellulose und/ oder Alkyl-Hydroxyalkyl-Cellulose.
Synthetische hergestellte in Wasser lösliche organische Polymere können aus einem oder mehreren Schutzkolloiden bestehen, zum Beispiel ein oder mehrere Polyvinylpyrrolidone und/ oder Polyvinylacetale mit Molekulargewichten von 2000 bis 400'000, voll- oder teilverseifte und/ oder mit Aminogruppen, Carbonsäuregruppen und/ oder Alkylgruppen modifizierte Polyvinylalkohole mit einem Hydrolysegrad von bevorzugt 70 bis 100 Mol-%, insbesondere von 80 bis 98 Mol-%, und einer Höpplerviskosität in 4%iger wässriger Lösung von bevorzugt 1 bis 50 mPas, insbesondere von 3 bis 40 mPas (gemessen bei 20°C nach DIN 53015) sowie Melaminformaldehydsulfonate, Naphthalinformaldehyd-sulfonate, Blockcopolymerisate von Propylenoxid und Ethylenoxid, Styrol-Maleinsäure- und/oder Vinylether-Maleinsäure-Copolymerisate. Höhermolekulare Oligomere können nicht-ionische, anionische, kationische und/oder amphotere Emulgatoren sein, wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen sowie Ester von Sulfobernsteinsäure, quarternäre Alkylammonium-Salze, quarternäre Alkylphosphonium-Salze, Polyadditionsprodukte wie Polyalkoxylate, beispielsweise Addukte von 5 bis 50 Mol Ethylenoxid und/oder Propylenoxid pro Mol an lineare und/oder verzweigte C₆- bis C₂₂-Alkanole, Alkylphenole, höhere Fettsäuren, höhere Fettsäureamine, primäre und/oder sekundäre höhere Alkyl-Amine, wobei die Alkylgruppe jeweils bevorzugt eine lineare und/oder verzweigte C₆- bis C₂₂-Alkylgruppe ist. Ganz besonders bevorzugt sind synthetische Stabilisierungssysteme, insbesondere teilverseifte, gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Bevorzugte synthetische Stabilisierungssysteme sind insbesondere modifizierte und/oder unmodifizierte Polyvinylalkohole mit einem Hydrolysegrad von 80 bis 98 Mol-% und einer Höpplerviskosität als 4%ige wässrige Lösung von 1 bis 50 mPas und/ oder Polyvinylpyrrolidon.
Es ist auch möglich, dass bei einer erfindungsgemäßen Mischung mehrere in Wasser lösliche organische Polymere eingesetzt werden, wie beispielsweise eine Kombination von einer oder mehreren natürlichen Verbindungen mit einer oder mehreren synthetisch hergestellten Verbindungen.
Wird eine erfindungsgemäße, wässrige Zusammensetzung (auch Dispersion oder Emulsion genannt) bzw. Zubereitung im Sinne der vorliegenden Erfindung verwendet, kann das Gewichtsverhältnis der jeweils eingesetzten Organosiliciumverbindung zum organischen Polymer von 95 : 5 bis 5 : 95 betragen, insbesondere von 85 : 15 bis 15 : 85, und bevorzugt von 70 : 30 bis 30 : 70, und ganz besonders bevorzugt von 60 : 40 bis 40 : 60 betragen, wobei die Zusammensetzung bzw. Zubereitung vorteilhaft 5 bis 95 Gewichtsteile Wasser, vorzugsweise 10 bis 70 Gew.-TI., besonders vorzugsweise 15 bis 60 Gew.-TI., ganz besonders vorzugsweise 20 bis 50 Gew.-TI., insbesondere 25 bis 40 Gew.-TI. Wasser pro 100 Gew.-TI. Zusammensetzung bzw. Zubereitung enthält.

Bildet das in Wasser lösliche Polymer mit der Organosiliciumverbindung eine Dispersion, kann deren Partikelgröße durch die Wahl des Polymers, des eingesetzten Gewichtsverhältnisses des Polymers zur Organosiliciumverbindung wie auch durch die Art und Weise des Zusammenmischens gezielt eingestellt werden. Wird die Mischung zu einem Pulver getrocknet, und anschließend wieder dispergiert oder redispergiert, stellt sich in der Regel wieder die ursprüngliche Partikelgröße ein. Oft ist es vorteilhaft, wenn die in Wasser dispergierte, dispergierbare oder redispergierbare Mischung, wenn in Wasser dispergiert oder redispergiert, eine mittlere Partikelgröße von 0,1 bis 50 µm, insbesondere von 0,2 bis 30 µm, aufweist. Liegt die Mischung in Pulverform vor, hat sich eine mittlere Partikelgröße von 20 bis 500 µm, insbesondere von 50 bis 250 µm als vorteilhaft erwiesen. Allerdings kann sie auch außerhalb dieses Bereiches liegen, wobei größere Partikel oft geeigneter sind als kleinere, welche eher zum Stauben neigen.
Die Bestimmung der Partikelgröße kann mit den üblichen Messmethoden durchgeführt werden, wobei bevorzugt die Methode der Lichtstreuung verwendet wird und die Partikelgröße als Volumenmittel angegeben wird.
Die in Wasser dispergierbare oder redispergierbare Mischung, wenn in Wasser dispergiert oder redispergiert, besitzt vorteilhafterweise einen Feststoffgehalt von etwa 5 bis 75 Gew.-%, insbesondere etwa 15 bis 65 Gew.-%, und ganz besonders bevorzugt von etwa 30 bis 50 Gew.-% und besitzt typischerweise eine Viskosität von etwa 100 bis 100'000 mPas, bevorzugt etwa 200 bis 25'000 mPas, insbesondere etwa 300 bis 10'000 mPas, und ganz bevorzugt etwa 500 bis 5'000 mPas, gemessen nach DIN 53 015.
Die erfindungsgemäßen Mischungen bzw. Mischungen für die erfindungsgemäße Verwendung können noch weitere Zusatzstoffe enthalten. Der Art der weiteren Zusatzstoffe sind keine Grenzen gesetzt. In der Regel haben sie eine wichtige Funktion in der Anwendung des erfindungsgemäßen Pulvers, was aber nicht zwingend ist. Es können auch weitere in Wasser lösliche organische Polymere zugegeben werden, wobei deren Zugabe in diesem Fall bevorzugt pulverförmig erfolgt.
Der Gehalt der Zusatzstoffe, bezogen auf die Summe des in Wasser löslichen organischen Polymeren und der Organosiliciumverbindung, unterliegt keinen wesentlichen Grenzen. So kann der Gehalt beispielsweise an grenzflächenaktiven Substanzen sehr klein sein und im Rahmen von etwa 0,01 Gew.-% oder mehr, insbesondere etwa 0,1 Gew.-% oder mehr und bevorzugt etwa 1 Gew.-% oder mehr liegen, bezogen auf den Feststoffgehalt der Mischung. Auf der anderen Seite können den erfindungsgemäßen Mischungen auch wesentlich größere Anteile an Zusatzstoffen beigemischt werden, wie beispielsweise Füllstoffe oder Dispersionen und/oder Dispersionspulver auf Basis von Emulsions- und/oder Suspensionspolymerisaten enthaltend beispielsweise Copolymerisate auf Basis von Vinylacetat, Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/oder Styrol-Butadien. In diesem Fall können auf einen Teil des erfindungsgemäßen Materials bis zu etwa 1000 Teile, insbesondere bis zu etwa 500 Teile und bevorzugt bis zu etwa 100 Teile an Zusatzstoffen zugegeben werden.

Bevorzugte Zusatzstoffe sind insbesondere Hydrophobierungsmittel, wie Fettsäuren sowie deren Salze und Ester, Fettalkohole, Silane, Luftporenbildner, Netzmittel, Entschäumer, Emulgatoren, Filmbildehilfsmittel, Abbinde- und Erstarrungsbeschleuniger, Abbindeverzögerer, Verdickungsmittel, Dispergiermittel, Rheologiesteuerungsadditive. wie Zementverflüssiger, Polycarboxylate, Polycarboxylatether, Polyacrylamide und/ oder Verdicker, Korrosionsinhibitoren, wie Alkylammoniumbenzoate, Aminoalkohole, Glukonsäure und/oder deren Alkali- und Erdalkalisalze, Wasserretentionsmittel, Cellulosefasern und Celluloseether, Stärkeether, Guarether, Additive zur Reduktion von Ausblühungen, der Sedimentation und/ oder des Ausschwimmens, Füllstoffe, und, wenn die Mischung pulverförmig ist, Additive zur Reduktion der Pulververblockung und/oder filmbildende, wasserunlösliche Dispersionspulver, und wenn die Mischung flüssig ist, filmbildende Polymerdispersionen.

Des Weiteren können als Zusatzstoffe pulverförmige und/oder flüssige Entschäumer, Netzmittel, Alkyl-, Hydroxyalkyl- und/oder Alkylhydroxyalkyl-Polysaccharidether wie Celluloseether, Stärkeether und/oder Guarether, wobei die Alkyl- und Hydroxyalkylgruppe typischerweise eine C₁- bis C₄- Gruppe ist, synthetische Polysaccharide, wie anionische, nonionische oder kationische Heteropolysaccharide, insbesondere Xanthan Gum oder Wellan Gum, Cellulosefasern, Dispergiermittel, Zementverflüssiger, Abbindebeschleuniger, Erstarrungsbeschleuniger, Abbindeverzögerer, Luftporenbildner, Polycarboxylate, Polycarboxylatether, Polyacrylamide, voll- und/oder teilverseifte, und gegebenenfalls modifizierte, Polyvinylalkohole, Polyvinylpyrrolidone, Polyalkylenoxide und Polyalkylenglykole, wobei die Alkylengruppe typischerweise eine C₂- und/ oder C₃-Gruppe ist, wozu auch Blockcopolymerisate zählen, Dispersionen und Dispersionspulver enthaltende Copolymerisate, wie beispielsweise auf Basis von Vinylacetat, Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/oder Styrol-Butadien, Hydrophobierungsmittel, wie Silane, Silanester, Siloxane, Silicone, Fettsäuren und/oder Fettsäureester, Verdickungsmittel, Füllstoffe wie quarzitische und/oder carbonatische Sande und/oder Mehle wie beispielsweise Quarzsand und/oder Kalksteinmehl, Carbonate, Silikate, Schichtsilikate, gefällte Kieselsäuren, Leichtfüllstoffe wie Mirohohlkugeln aus Glas, Polymere wie beispielsweise Polystyrolkugeln, Alumosilikate, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calcium-metasilikat und/oder vulkanische Schlacke sowie Puzzolane wie Metakaolin und/oder latenthydraulische Komponenten zugegeben werden. Ganz speziell bevorzugte Zusatzstoffe sind Polymerdispersionen, Dispersionspulver, Polysaccharidether, Verflüssiger und Hydrophobierungsmittel, insbesondere Silane, Silanester, Fettsäuren und/oder Fettsäureester.

Gegenstand der vorliegenden Erfindung ist ebenfalls ein Verfahren zur Herstellung erfindungsgemäßer Mischungen, indem man
- in einem ersten Schritt mindestens 10 Gew.-% mindestens eines organischen Polymers gemäß (i), bezogen auf die Gesamtmenge an Organosiliciumverbindungen, mit mindestens einer Organosiliciumverbindung gemäß (ii) vermischt, die gegebenenfalls restliche Menge an organischem Polymer während und/oder nach dem Dispergieren zugibt, optional weitere Zusatzstoffe vor, während und/oder nach dem Dispergieren zusetzt und
- in einem zweiten Schritt die im ersten Schritt erhaltene Dispersion trocknet, wobei man während und/ oder nach der Trocknung weitere Zusatzstoffe zugegeben kann.

Dabei werden die erfindungsgemäßen Mischungen durch ein erfindungsgemäßes Verfahren hergestellt, bei dem in einem ersten Schritt mindestens 10 Gew.-%, bevorzugt mindestens 20 Gew.-% des organischen wasserlöslichen Polymers, bezogen auf die Gesamtmenge an Organosiliciumverbindung, mit der Organosiliciumverbindung vermischt werden. Dieser Schritt wird in der Regel in Wasser durchgeführt, wobei das organische Polymer vorgängig in Wasser gelöst wird. Die gegebenenfalls restliche Menge an organischem Polymer wird während und/oder nach dem Dispergieren bzw. Emulgieren zugegeben. Oft ist es vorteilhaft, wenn die Vermischung unter Rühren durchgeführt wird, wobei in der Regel höhere Scherkräfte bevorzugt werden. Dieser Verfahrensschritt kann batchweise, kontinuierlich wie beispielsweise über statische Mischer, oder semikontinuierlich sowohl bei Raumtemperatur als auch bei erhöhter Temperatur erfolgen. So kann man die vorliegenden Einsatzstoffe im ersten Schritt des erfindungsgemäßen Verfahrens rühren, dispergieren sowie emulgieren, um eine Zusammensetzung als Basis für den zweiten Verfahrensschritt bereitstellen zu können.

In einer anderen bevorzugten Ausführungsform wird die Organosiliciumverbindung vorgängig unter Verwendung von nichtionischen, kationischen und/oder anionischen Emulgatoren dispergiert, wobei die erhaltene Dispersion anschließend mit dem organischen wasserlöslichen Polymer vermischt wird.

Es können noch weitere Zusatzstoffe vor, während und/oder nach dem Dispergieren zugegeben werden, wobei es hilfreich sein kann, wenn der wässrigen Phase auch ein pH-Puffer wie beispielsweise Natriumcarbonat oder Natriumbicarbonat zugesetzt wird. Weitere geeignete Zusatzstoffe sind beispielsweise Entschäumer und/oder Netzmittel, niedermolekulare Polyalkylenglykole, Fettsäuren und/oder Fettsäurederivate.

Falls die Organosiliciumverbindung eine etwas erhöhte Viskosität aufweist, sodass bei Raumtemperatur eine exakte Dosierung erschwert ist, kann diese auch erwärmt werden, um die Dosierung und die Dispergierung zu vereinfachen. Alternativ kann der Organosiliciumverbindung vorgängig auch ein Verdünnungsmittel zugegeben werden, um die Viskosität einzustellen, wobei oft bevorzugt wird, wenn dieses Verdünnungsmittel anschließend beispielsweise durch Destillation wieder entfernt wird. Als Verdünnungsmittel kann auch eine niederviskose Organosiliciumverbindung eingesetzt werden, welche nicht entfernt werden muss.

Die erhaltene Dispersion wird üblicherweise anschließend getrocknet, wobei während und/ oder nach der Trocknung weitere Zusatzstoffe zugegeben werden können, wobei die Trocknung bevorzugt mittels Sprühtrocknung, Gefriertrocknung, Fliessbetttrocknung, Walzentrocknung, Granulation oder Schnelltrocknung erfolgt, und wobei die Sprühtrocknung besonders bevorzugt ist, und die Versprühung beispielsweise mittels Sprührad, Ein- oder Mehrstoff-Düse erfolgen kann. Oft ist es hilfreich, wenn während und/oder nach der Trocknung Antiblockmittel und/ oder Füllstoffe wie Aluminiumsilicate, kolloidales Siliciumdioxidgel, pyrogen erzeugten Siliciumdioxid, gemahlene Tone, Perlite, Vermiculite, Leichtspat, Talkum, Zemente, Kreidepulver, Calcium/Magnesium-Mischcarbonate und/oder Diatomeenerde zugegeben werden.

Falls notwendig, kann die wässrige Dispersion dazu noch mit Wasser verdünnt werden, um eine für die Trocknung geeignete Viskosität zu erhalten. Der Trocknungstemperatur sind grundsätzlich keine wesentlichen Grenzen gesetzt. Insbesondere aus sicherheitstechnischen Überlegungen soll sie jedoch in der Regel etwa 200 °C, insbesondere etwa 180 °C nicht übersteigen. Um eine genügend effiziente Trocknung zu erzielen, sind Temperaturen von etwa 110 °C oder höher, insbesondere etwa 120 °C oder höher bevorzugt. Die Austrittstemperatur des beim Trocknen gebildeten Gasstromes beträgt in der Regel etwa 40 °C bis 100 °C, insbesondere etwa 50 °C bis 90 °C.

Das erfindungsgemäße Verfahren kann ferner die Zugabe von weiteren Zusatzstoffen beinhalten, wobei die besagten Zusatzstoffe je nach Art und/oder prozesstechnischen Möglichkeiten beispielsweise zunächst mit der organischen Komponente und/oder mit dem wasserlöslichen organischen polymeren Schutzkolloid vermischt, der erhaltenen wässrigen Dispersion zugegeben und/ oder als Pulver während und/oder nach der Trocknung dem erhaltenen Pulver beigemischt werden. Flüssige Additive können aber auch während oder nach der Trocknung auf das Pulver gesprüht werden. Bevorzugt werden die flüssigen und/oder wasserlöslichen Additive vor, während oder nach dem Dispergieren zugegeben und pulverförmige Additive werden bevorzugt während oder nach der Trocknung mit dem erhaltenen Pulver vermischt.

Falls eine andere Dispersion ebenfalls getrocknet werden soll, ist es möglich, die zu trocknenden Dispersionen vor der Trocknung miteinander zu vermischen und gemeinsam zu versprühen und zu trocknen, gleichzeitig über eine Zweistoff- oder Mehrstoffdüse getrennt zu versprühen und anschließend gleichzeitig miteinander zu trocknen, oder aber beide Dispersionen separat zu versprühen und die erhaltenen Pulver anschließend miteinander zu vermischen.

Die erfindungsgemäßen Mischungen werden insbesondere in und auf Massen verwendet, welche mindestens ein mineralisches Bindemittel, insbesondere ein hydraulisch abbindendes Bindemittel, enthalten. Des Weiteren werden sie zum Schutz von Metall, Baustoffen, Bausteinen, Bauteilen und/oder Bauwerken vor Korrosion, wobei betreffendes Metall in der Regel von mineralischen Baustoffen umgeben ist, verwendet. Zudem eigenen sich die erfindungsgemäßen Mischungen auch zur Hydrophobierung solcher Massen, wie auch zur Steinverfestigung.

Die Massen, enthaltend mindestens ein mineralisches Bindemittel, sind bevorzugt Beton, insbesondere Stahlbeton, Blähbeton, Gasbeton, Faserbeton, Stahlfaserbeton, Porenbeton, Spritzbeton, Unterwasserbeton, Walzbeton, Schleuderbeton, Vakuumbeton, Selbstverdichtender Beton (SCC), Estrichbeton, Splittbeton, Drainbeton, Schaumbeton, Fertigbauteile aus Beton hochfester und ultrahochfester Beton und/oder Glasschaumbeton, Ziegel, Terrakotta, Putze wie Gips- und/oder Kalk- und/oder Zement-Putze, Mörtel, insbesondere Trockenmörtel, wie Reparatur- und Vollwärmeschutzmörtel, Fugen- und Fliesenkleber, Plywood-Mörtel, Mörtel für Haftbrücken, zementäre Parkettklebstoffe, Zementgrundierungen, Nivellier- und/oder Spachtelmassen, Dichtungsschlämmen, Pulverfarben sowie Betonanstriche, wie beispielsweise Slurries zur Beschichtung des Stahls oder zur Ausbesserung von Stahlbeton bei der Betonsanierung.

Die erfindungsgemäßen Mischungen können auf beliebige Substrate aufgetragen werden, um diese vor Korrosion zu schützen. Nicht limitierende Beispiele solcher Substrate sind mineralische Baumaterialien, Bausteine, Bauteile und/oder Bauwerke, insbesondere wenn sie mit Metall in Berührung stehen, Metall umhüllen oder einschließen, mineralische Baustoffe, wie Beton, Kalksandstein, Granit, Kalk, Gips, Marmor, Perlit, Klinker, poröse Fliesen und Kacheln, Naturstein, Estrich, Tonartikel aber auch Kunststein, Mauerwerke, Fassaden, Dächer sowie Bauwerke, wie Brücken, Hafenanlagen, Wohngebäude, Industriegebäude und öffentlich genutzte Gebäude, wie Parkhäuser, Bahnhöfe oder Schulen, aber auch Fertigteile, wie Bahnschwellen und/oder L-Steine.

Ebenso können die erfindungsgemäßen Mischungen als Mittel oder in Zubereitungen zur Steinverfestigung und als Mittel oder in Zubereitungen zur Hydrophobierung und zum Schutz durch Schädigungen durch Wasser verwendet werden.
Die erfindungsgemäßen Mischungen können zudem auch zur Beschichtung von Kabeln, insbesondere zur Isolierung von Kabeln und/oder zur Hydrophobierung von Kabeloberflächen eingesetzt werden.
Gegenstand der vorliegenden Erfindung sind ebenfalls Zubereitungen oder Mittel enthaltend die erfindungsgemäßen Mischungen, insbesondere solche, die mindestens eine erfindungsgemäße Mischung oder mindestens eine erfindungsgemäße Mischung und Wasser enthalten bzw. darauf basieren. Dabei wird die Mischung in einer Konzentration zwischen 0,1 bis 10 Gew.-%, und bevorzugt bei 0,2 bis 5 Gew.-%, bezogen auf den Trockengehalt der Zubereitung oder Mittel, eingesetzt, wobei darauf zu achten ist, dass allfällige Normvorschriften eingehalten werden.
Erfindungsgemäße Zubereitungen oder Mittel sind beispielsweise - aber nicht ausschließlich - Reparaturmörtel, zementbasierte Dichtmassen, Fugenmassen, Beton, insbesondere Stahlbeton, Blähbeton, Gasbeton, Faserbeton, Stahlfaserbeton, Porenbeton, Spritzbeton, Unterwasserbeton, Walzbeton, Schleuderbeton, Vakuumbeton, Selbstverdichtender Beton (SCC), Estrichbeton, Splittbeton, Drainbeton, hochfester und ultrahochfester Beton, Glasschaumbeton, Terrakotta, Gips- und/ oder Kalk- und/oder Zement-Putze, Reparatur- und Vollwärmeschutzmörtel, Fugen- und Fliesenklebern, Nivellier- und Spachtelmassen, Dichtungsschlämmen, Pulverfarben sowie Betonanstriche, aber auch wässrige, die Mischung enthaltende Dispersionen oder Lösungen.
Daher sind ebenfalls Gegenstand in vorteilhafter, erfindungsgemäßer Weise erhältliche Substrate, d. h. Baustoffe, Bausteine, Bauteile oder Bauwerke, die auf einer erfindungsgemäßen Zubereitung, einem erfindungsgemäßen Mittel oder einer erfindungsgemäßen Mischung basieren.
Auch zählen Artikel, die auf einem erfindungsgemäßen Substrat basieren, zum Gegenstand der Erfindung. Beispiele sind Artikel aus erfindungsgemäßen Betonfertigteilen, wie Fertighäuser, Tunnel, Brücken, Strassen, Hausfassaden und Behälter

Zudem ist ein weiterer Gegenstand der vorliegenden Erfindung somit auch eine Mischung, die nach dem erfindungsgemäßen Verfahren erhältlich ist.

Die erfindungsgemäßen Mischungen, wenn sie in Pulverform sind, zeichnen sich überraschenderweise durch besonders gute Handhabbarkeit, Lagerbeständigkeit bei guter Rieselfähigkeit aus, wodurch sie gut zu anderen Formulierungen dosiert werden können, welche flüssiger, pastöser oder pulverförmiger Natur sein können.

Des Weiteren zeigen die erfindungsgemäß verwendeten Mischungen und die erfindungsgemäßen Mischungen überraschenderweise ein ausgezeichnetes Dispergier-, Redispergier- bzw. Löseverhalten in Wasser und eine sehr gute Benetzbarkeit, wodurch sie sich sehr gut in die Massen einrühren lassen. Ist die Mischung pulverförmig, so lässt sie sich idealerweise schon bei Kontakt mit Wasser innerhalb von wenigen Sekunden, allenfalls durch leichtes Umrühren dispergieren, redispergieren oder lösen. In gewissen Fällen ist es auch möglich, dass etwas stärkere Scherkräfte notwendig sind. Jedenfalls genügen in der Regel die bei normal durchgeführten Anrührprozessen von Trockenmörteln auftretenden Scherkräfte um das erfindungsgemäße Pulver vollständig zu dispergieren oder redispergieren, wodurch die Partikelgröße der wässrigen Dispersion vor der Trocknung sowie eine homogene Verteilung in der Masse erreicht wird.

Obwohl bei den erfindungsgemäßen Mischungen die in der Regel flüssige Organosiliciumverbindung durch das wasserlösliche organische Polymer so umschlossen ist, dass die Organosiliciumverbindung auch während und nach einem Trocknungsschritt verkapselt bleibt, wurde überraschenderweise gefunden, dass diese in der Anwendung zusammen mit dem mineralischen Bindemittel und Wasser ihre Wirkung voll entfalten kann. Zudem wirkt sich das wasserlösliche organische Polymer während wie auch nach der Herstellung der Baustoffe und für die weiteren Eigenschaften des Frischbetons/Frischmörtels wie auch für das ausgehärtete System in der Regel nicht störend aus. Es bewirkt im Gegenteil sogar vorteilhaft eine sehr gute Verarbeitbarkeit, Benetzbarkeit, gute Dispergier- und/oder Redispergierbarkeit. Zudem kann das in Wasser lösliche Polymer auch als Bindemittel wirken, wodurch die physikalischen Festigkeiten der abgebundenen Baustoffe erhöht werden.

Somit zeichnen sich die erfindungsgemäßen Mischungen vorteilhaft auch durch eine besonders gleichmäßige Verteilung aus und zeigen in hervorragender Weise eine besonders korrosionsinhibierende Wirkung im Baukörper und eine gute Alkalistabilität des Baustoffes. Zusätzlich werden auch schädliche Chloridionen sowie andere in Wasser gelöste Schadstoffe, wie z. B. Sulfate, welche zur Ettringitbildung führen können, aus dem Baustoff fern gehalten. Deshalb eignen sie sich besonders gut für die Herstellung von verschiedensten Baukörpern und für die Reparatur und Restoration von Bauwerken bzw. Bauteilen, wobei beim Einsatz solcher Mischungen in mineralisch abbindenden Massen ein gegenüber marktgängigen Mitteln nochmals deutlich verbesserter Korrosionsschutz sowohl der von Baustoff umgebenen Stahl- bzw. Metallarmierungen als auch von Bausteinen bzw. Bauwerken erhalten wird.

Darüber hinaus ist besonders überraschend, dass über den üblichen Hydrophobierungseffekt bei Einsatz von hydrophobierend wirkenden Silanprodukten hinaus durch Einsatz einer erfindungsgemäßen Mischung insbesondere die Korrosionseigenschaften so ausgestatteter Bausteine, Bauteile bzw. Bauwerke und entsprechender Stahl- bzw. Metallarmierungen - auch gegenüber marktgängigen Korrosionsschutzmaßnahmen - nochmals deutlich verbessert werden konnten.

Die vorliegende Erfindung wird durch die nachfolgenden Beispiele näher erläutert, ohne den Gegenstand zu beschränken.

### Beispiele

### Beispiel 1

### Herstellung von Pulver 1

100 g Protectosil® 266 wurden in 329,2 g einer 24 gew.-%igen wässrigen Lösung eines Polyvinylalkohols mit einem Verseifungsgrad von 88 Mol-% und einer Höppler-Viskosität als 4%ige Lösung von 4 mPa s mit einem Propellerrührer bei 1 000 Upm während 15 Minuten emulgiert und anschließend mit Wasser auf einen Feststoffgehalt von 25 Gew.-% verdünnt. Diese Mischung wurde auf einem Laborsprühturm mit einer Zweistoffdüse mittels Druckluft bei einer Einlasstemperatur von 120 °C versprüht und getrocknet. Als Antibackmittel wurden 0,6 Gew.-% einer pyrogenen Kieselsäure und 9,4 Gew.-% eines handelsüblichen Carbonates, bezogen auf das fertige Pulver, zugegeben. Es wurde in guter Ausbeute ein frei fließendes, in Wasser gut redispergierbares weißes Pulver erhalten, das selbst beim Verreiben zwischen den Fingern nicht schmierig wird und somit das eingesetzte Propylalkoxysiloxangemisch in gut verkapselter Form enthält.

### Beispiel 2

### Herstellung von Pulver 2

Beispiel 1 wurde wiederholt, wobei die hergestellte Mischung nicht mit Wasser verdünnt wurde. Der Feststoffgehalt betrug 37,9 Gew.-% und die Brookfieldviskosität, gemessen mit Spindel 3 bei 20 Upm und 25 °C, 1 590 mPa s. Die Sprühtrocknung erfolgte mittels einer Zerstäuberscheibe bei einer Eingangstemperatur von 150 °C. Es wurde in guter Ausbeute ein frei fließendes, gut benetzbares und gut redispergierbares weißes Pulver erhalten, welches, wenn mit Wasser angerührt, innerhalb kurzer Zeit in die Primärpartikel zerfällt.

### Beispiel 3

### Herstellung von Pulver 3

200,0 g einer 50 gew.-%ige wässrigen emulgatorstabilisierten Emulsion aus Protectosil® 266 wurden mit 329,2 g einer 24 gew.-%igen wässrigen Lösung eines Polyvinylalkohols mit einem Verseifungsgrad von 88 Mol-% und einer Höppler-Viskosität als 4%ige Lösung von 4 mPa s analog Beispiel 2 gemischt, verdünnt, getrocknet und mit Antibackmittel abgemischt. Es wurde ein frei fließendes, gut benetzbares und gut redispergierbares weißes Pulver erhalten, das selbst beim Verreiben zwischen den Fingern nicht schmierig wird und das eingesetzte Siloxan somit in gut verkapselter Form enthält.

### Beispiel 4

### Herstellung von Pulver 4

40 g eines flüssigen Silans auf Basis von Isobutyltriethoxysilan wurden in 595,7 g einer 24 gew.-%igen wässrigen Lösung eines Polyvinylalkohols mit einem Verseifungsgrad von 88 Mol-% und einer Höpplerviskosität als 4%ige Lösung von 4 mPa s mit einem Propellerrührer bei 1 000 Upm während 15 Minuten emulgiert und anschließend mit Wasser auf einen Feststoffgehalt von 25 Gew.-% verdünnt. Diese Mischung wurde auf einem Laborsprühturm mit einer Zweistoffdüse mittels Druckluft bei einer Einlasstemperatur von 120 °C versprüht und getrocknet. Als Antibackmittel wurden 0,6 Gew.-% einer pyrogenen Kieselsäure und 9,4 Gew.-% eines handelsüblichen Carbonates, bezogen auf das fertige Pulver, zugegeben. Es wurde in guter Ausbeute ein frei fließendes, gut benetzbares und gut redispergierbares weißes Pulver erhalten, das selbst beim Verreiben zwischen den Fingern nicht schmierig wird und die eingesetzte Silan-Zubereitung somit in gut verkapselter Form enthält.

### Beispiel 5

### Herstellung der Pulver 5 bis 10 gemäß EP 0 228 657:

Analog zu den in EP 0 228 657 beschriebenen Beispielen wurden die entsprechenden Polysiloxane bzw. Silane, vgl. Tabelle 1, in wässriger Polyvinylalkohollösung
(24,3 gew.-%ige Lösung eines Polyvinylalkohols mit einem Verseifungsgrad von 88 Mol-% und einer Höppler-Viskosität als 4%ige Lösung von 4 mPa s) dispergiert bzw. emulgiert und mit Wasser auf 40 Gew.-% nichtwässrigen Anteil verdünnt. Die Stabilität der Sprühansätze wurde nach 2 und 12 h beurteilt. Als Stabilitätskriterium ist in Tabelle 3 der entstandene Überstand in cm angegeben. Nach vorherigem Aufrühren wurden die Sprühansätze dann in einem Laborsprühtrockner (Eingangstemperatur 135 °C, Ausgangstemperatur 76 °C) mittels Zweistoffdüse (Luftdruck 3,5 bar) versprüht und getrocknet.

**Tabelle 1 :**

| | | | | | | |
|---|---|---|---|---|---|---|
| Bsp. Nr. | 5a | 5b | 5c | 5d | 5e | 5f |
| Pulver Nr. | 5 | 6 | 7 | 8 | 9 | 10 |
| Bsp. aus EP228657 | 3^{a)} | 1^{a)} | 5^{a)} | 7^{a)} | 11 | 10 |
| Siloxan Anteil | 80 % | 90 % | 95 % | 90 % | 90 % | 90 % |
| PVOH-Anteil | 20 % | 10 % | 5 % | 10 % | 10 % | 10 % |

| Stabilität nach | | | | | | |
|---|---|---|---|---|---|---|
| 2 h | 0 | 0.1 | 1.5 | 0 | 0 | 0 |
| 12 h | 0 | 1.0 | 3.5 | 0.5 | 0.1 | 0.5 |
| Ausbeute | mäßig | schlecht | sehr schlecht | N/A^{b)} | N/A^{b)} | N/A^{b)} |

| | | | | | | |
|---|---|---|---|---|---|---|
| a) Es wurde anstelle des Methylsiloxans das entsprechende Propylsiloxan verwendet b) Aufgrund der schlechten Ausbeute der Pulver 5 -7 wurden diese Mischungen nicht versprüht. | | | | | | |

Die Sprühansätze waren bis auf Beispiel 5a mit 20 % Polyvinylalkohol nicht stabil und wurden deshalb vor dem Sprühtrocknen aufgerührt. Aufgrund der schlechten Sprühbarkeit wurden nur die Beispiele 5a - 5c getrocknet.

Die Ausbeuten gehen mit abnehmendem PVOH-Gehalt drastisch zurück und man erhält zunehmend einen schmierigen Wandbelag im Sprühturm. Auch die Pulver sind beim Verreiben zwischen den Fingern schmierig, was zeigt, dass das Polysiloxan nicht richtig verkapselt ist.

Die nach der Lehre von EP 0 228 657 hergestellten Sprühansätze und Pulver zeigen deutlich, dass deren Eigenschaften bezüglich Sprühansatzstabilität, Sprühbarkeit wenig vorteilhaft sind. Zudem zeigen sie eine sehr schlechte Benetzbarkeit und eine stark verlangsamte Redispergierbarkeit, was die Verwendung in Baustoffmassen deutlich erschwert. Somit müssen Pulver, basierend auf diesen Zusammensetzungen, in einem aufwendigeren Verfahren hergestellt werden. Werden jedoch das Herstellverfahren und gegebenenfalls zusätzlich zugegebene Additive so gewählt, dass die erhaltenen Pulver den Anforderungen bezüglich Lagerfähigkeit, Benetzbarkeit und Redispergierbarkeit genügen, können auch solche Zusammensetzungen für die erfinderische Verwendung eingesetzt werden.

### Beispiel 6

### Anwendungstechnische Untersuchungen - Bestimmung des Wasseraufnahmekoeffizienten eines Zement/ Sand - Mörtels

Zur Beurteilung der korrosionsinhibierenden sowie gegebenenfalls hydrophobierenden Wirkung der Pulver im Vergleich zum flüssigen Ausgangsmaterial wurde der Wasseraufnahmekoeffizient nach 24 Stunden in Anlehnung an DIN 52617 bestimmt. Eine Mörtelgrundmischung bestehend aus 25 Gew.-% Portlandzement CEM I 42,5 N und 75 Gew.-% Normensand gemäß DIN EN 196 - 1 wurde jeweils mit dem in Tabelle 2 angegebenen Wirkstoff versetzt und mit 12 Gew.-% Wasser, bezogen auf die Trockenformulierung, mit einem 60 mm Propellerrührer mit einer Geschwindigkeit von 950 Upm während 60 Sekunden angerührt. Nach einer Reifezeit von 3 Minuten wurde der Mörtel von Hand nochmals kurz aufgerührt, dann in Kunststoffringformen mit 8 cm Durchmesser und 2 cm Höhe eingefüllt und die Oberfläche mit einem Spachtel auf Höhe der Form abgezogen. Die Prüflinge wurden 14 Tage bei 23 °C und 50 % relativer Luftfeuchtigkeit gelagert, wobei sie nach dem ersten Tag ausgeschalt wurden. Nach Wiegen der Prüfkörper wurden diese während 24 Stunden in Wasser gelagert und anschließend nach Abtrocknen des oberflächlich anhaftenden Wassers nochmals gewogen. Aus der Gewichtsdifferenz, der Oberfläche der Prüfkörper und der Dauer der Wasserlagerung wurde dann gemäß DIN 52617 der Wasseraufnahmekoefffizient ω₂₄ berechnet. Die Versuche wurden mit einem flüssigen Silan enthaltenden Wirkstoff wie auch mit den erfindungsgemäß verwendeten Pulvern durchgeführt. Es wurde keine nennenswerte Veränderung des Abbindeverhaltens beobachtet.

### Tabelle 2

Wasseraufnahmekoeffizient ω₂₄ von Pulver 3 und 1 im Vergleich zu flüssig eingesetztem Wirkstoff ohne PVOH in einem Zement/Sand-Mörtel nach einer 24 Stunden Wässerung. Der Wasseraufnahmekoeffizient wurde gemäß DIN 52617 bestimmt und ist in [kg/m^{2*}h^{0.5}] angegeben. Die Dosiermenge wurde so eingestellt, dass die Wirkstoffmenge bezogen auf Silan- bzw. Siloxan Menge jeweils 1,8 Gew.-% betrug, bezogen auf den Trockenanteil der verwendeten Mörtelmischung.

| Wirkstoff aus Beispiel | **Wasseraufnahmekoeffizient ω₂₄** | |
|---|---|---|
| | **Flüssig** | **Pulver** |
| 3 | 0.031 | 0.049 |
| 1 | 0.025 | 0.031 |

Mit Pulver 2 wurde der Wasseraufnahmekoeffizient wie oben beschrieben ermittelt, wobei jedoch ein Mörtel mit einer Mörtelgrundmischung, bestehend aus 34 Gew.-% Portlandzement CEM I 42.5, 59,8 Gew.-% Quarzsand 0,1 bis 0,5 mm, 3 Gew.-% Kalkhydrat, 0,2 Gew.-% Celluloseether Tylose MH 10007 P4 und 3 Gew.-% eines Redispersionspulvers auf Basis eines Ethylen-Vinylacetat Copolymers, verwendet wurde, die mit 22 Gew.-% Wasser angerührt wurde.

### Tabelle 3

Wasseraufnahmekoeffizient ω₂₄ von Pulver 2 im Mörtel (siehe Text) nach einer 24 Stunden Wässerung. Der Wasseraufnahmekoeffizient wurde gemäß DIN 52617 bestimmt und ist in [kg/m^{2*}h^{0.5}] angegeben.

| | **Wasseraufnahmekoeffizient ω₂₄** |
|---|---|
| ohne Additiv | 0.269 |
| 0.5 Gew.-% Pulver 2 | 0.196 |

Die Resultate aus Tabelle 2 zeigen deutlich, dass der zur Versprühung eingesetzte Polyvinylalkohol keinen wesentlichen Einfluss auf die Wasseraufnahme des ausgehärteten Mörtels, und somit auf den Wasseraufnahmekoeffizienten, aufweist. Zudem zeigen die Werte aus Tabelle 3, dass schon geringste Mengen des erfinderischen Pulvers eine deutliche Reduktion der Wasseraufnahme bewirken. Dadurch wird auch die Chlorid Penetration in Chlorid-haltigem Wasser reduziert, was eine allfällige Stahlkorrosion zusätzlich verunmöglicht, oder zumindest deutlich verzögert.

### Beispiel 7

### Bestimmung der korrosionsinhibierenden Wirkung von Pulvern anhand von Labortests

Ziel der Untersuchung war die Quantifizierung der Inhibitorwirksamkeit in Laboruntersuchungen. Die Anwendung von Standardmethoden (zum Beispiel die Prüfung nach ASTM) ist in diesem Fall nicht gegeben, da spezifische Eigenschaften speziell von Siliciumverbindungen basierenden Pulvern nicht, oder nur in geringem Masse, zum Tragen kommen. Es wurde daher im Labor der Effekt von zyklischer Bewitterung mit Trocken- und Nassperioden untersucht. Unter diesen Umständen können Austrocknungseffekte des Betons ablaufen, welche die Korrosion beeinflussen.

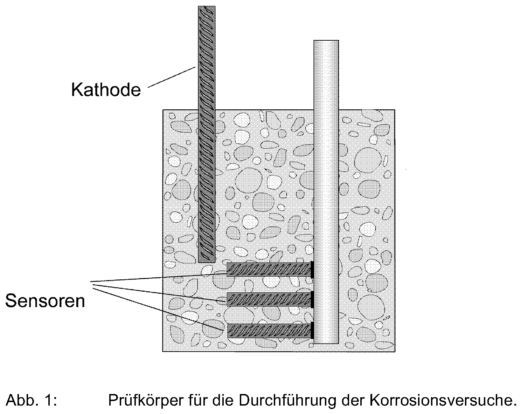

Die Verwendung von vorgefertigten Betonwürfeln mit Seitenlänge von 15 cm, welche mit je drei Sensoren zur Überwachung der Korrosionsgeschwindigkeit und des Korrosionszustands ausgerüstet sind, ermöglicht die kontinuierliche Erfassung des Korrosionsverhaltens. Die verwendete Betonrezeptur und die Herstellungsbedingungen sind in den Tabellen 2 bis 3 zusammengestellt. Der Prüfkörper für die Durchführung der Korrosionsversuche ist schematisch in Abb. 1 dargestellt.

**Tabelle 4**

| **Rezeptur des verwendeten Betons unter Verwendung von Portlandzement CEM I.** | | | | | |
|---|---|---|---|---|---|
| Rezeptur | Wasser [kg/m3] | Zement [kg/m3] | Zuschlag [kg/m3] | | |
| Beton W/Z 0.6 Größtkorn ø 16 | | | 0 - 4 mm | 4 - 8 mm | 8 - 16 mm |
| | 210 | 350 | 895 | 358 | 537 |

Es wurden 3 Bewehrungsstäbe mit Durchmesser 8 mm und Länge 45 mm als Sensoren eingebaut. Deren Betonüberdeckung betrug 10 mm, 28 mm und 46 mm. Für die Messung des Korrosionsstroms wurden diese Sensoren mit je einer Kathode verbunden (in Abb. 1 ist nur eine Kathode dargestellt).

Durch Nass/Trocken-Zyklen mit 5 Tagen bei 35 °C und 2 Tagen Eintauchen in Elektrolytlösung wurde die Bewitterung, wie sie im Verlaufe von jahreszeitlichen Beanspruchungen auftritt, simuliert. Die im Rahmen der Versuche durchgeführten Nass/Trockenzyklen treten bei Bauwerken üblicherweise nur ein bis zweimal pro Jahr auf. Das Eindringen von Chloriden kann daher unter diesen Versuchsbedingungen in stark beschleunigter Form simuliert werden (2 Wochen würden hier ca. 1 Jahr entsprechen). Mit Pulver 1 aus Beispiel 1 wurden 2 verschiedene Probekörper hergestellt. Die Prüfkörper P1 und P2 wurden mit einem Pulvergehalt von 2 % (P1), respektive 4 % (P2), bezogen auf den Zementgehalt, unter Verwendung der Betonzusammensetzung aus Tabelle 4 hergestellt. Die eingesetzte Pulvermenge entspricht einem Gehalt an Wirkstoff, bezogen auf die Organosiliciumverbindung, von 1 Gew.-%, respektive 2 Gew.-%.

Die Probekörper wurden nach 4 Tagen ausgeschalt und anschließend während 7 ½ Wochen bei 100 % relativer Luftfeuchtigkeit bei Raumtemperatur gelagert. Anschließend wurde mit der zyklischen Behandlung der Proben begonnen, wobei die Proben jeweils in 1 M wässrige NaCl - Lösung getaucht wurden.

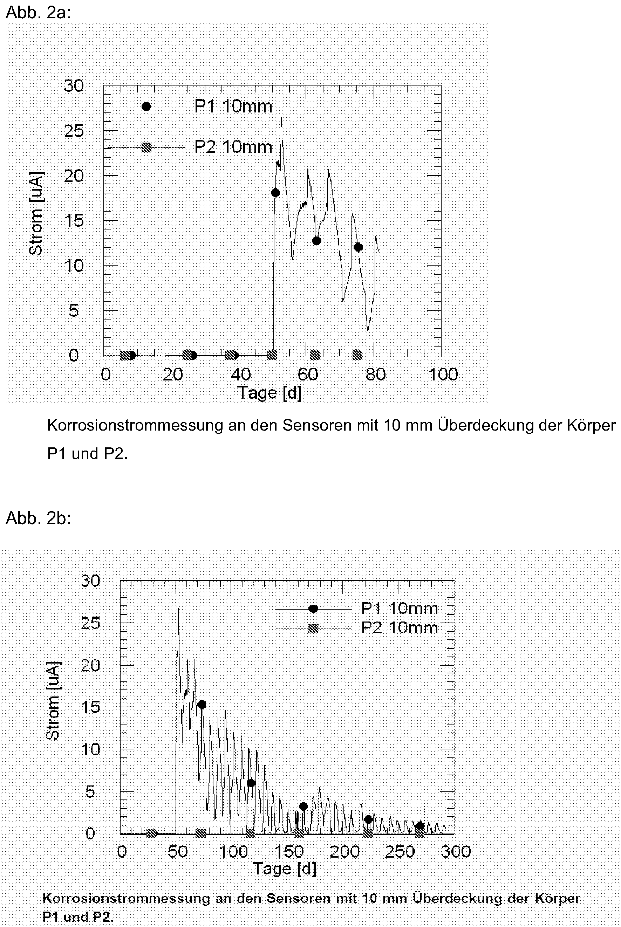

In Abb. 2a und 2b sind die Korrosionsstromverläufe dieser Probekörper an den Sensoren mit 10 mm Überdeckung der Körper P1 (mit 2 Gew.-% Pulver 1) und P2 (mit 4 Gew.-% Pulver 1) aufgezeigt. Der Probekörper P2 zeigt keine Korrosion. Demgegenüber wurde am Referenzkörper P1 auf der untersten Bewehrungslage (10 mm) die Aktivierung von Korrosion beobachtet. Der Körper P1 zeigt im Verlaufe der Zeit eine gewisse Verringerung der Korrosionsgeschwindigkeit, was auf eine gewisse inhibierende Wirkung zurückgeführt werden könnte. Aufgrund der vorliegenden Daten muss aber eine Pulverkonzentration von 2 Gew.-% als zu gering für eine wirksame Korrosionsschutzwirkung beurteilt werden. Eine aktive Wirkstoffkonzentration der Siliciumverbindung von etwa 2 Gew.-% (mit 4 Gew.-% Pulver 1), bezogen auf den Zementgehalt, hingegen weist deutlich eine korrosionsinhibierende Wirkung auf.

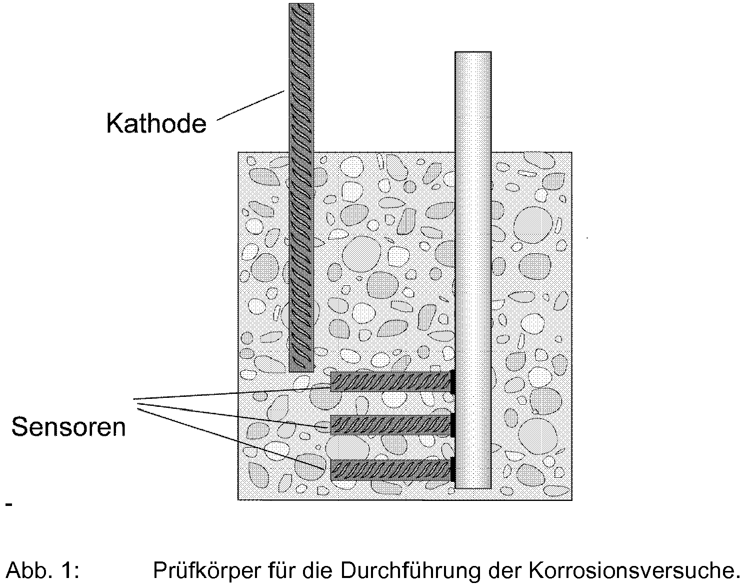

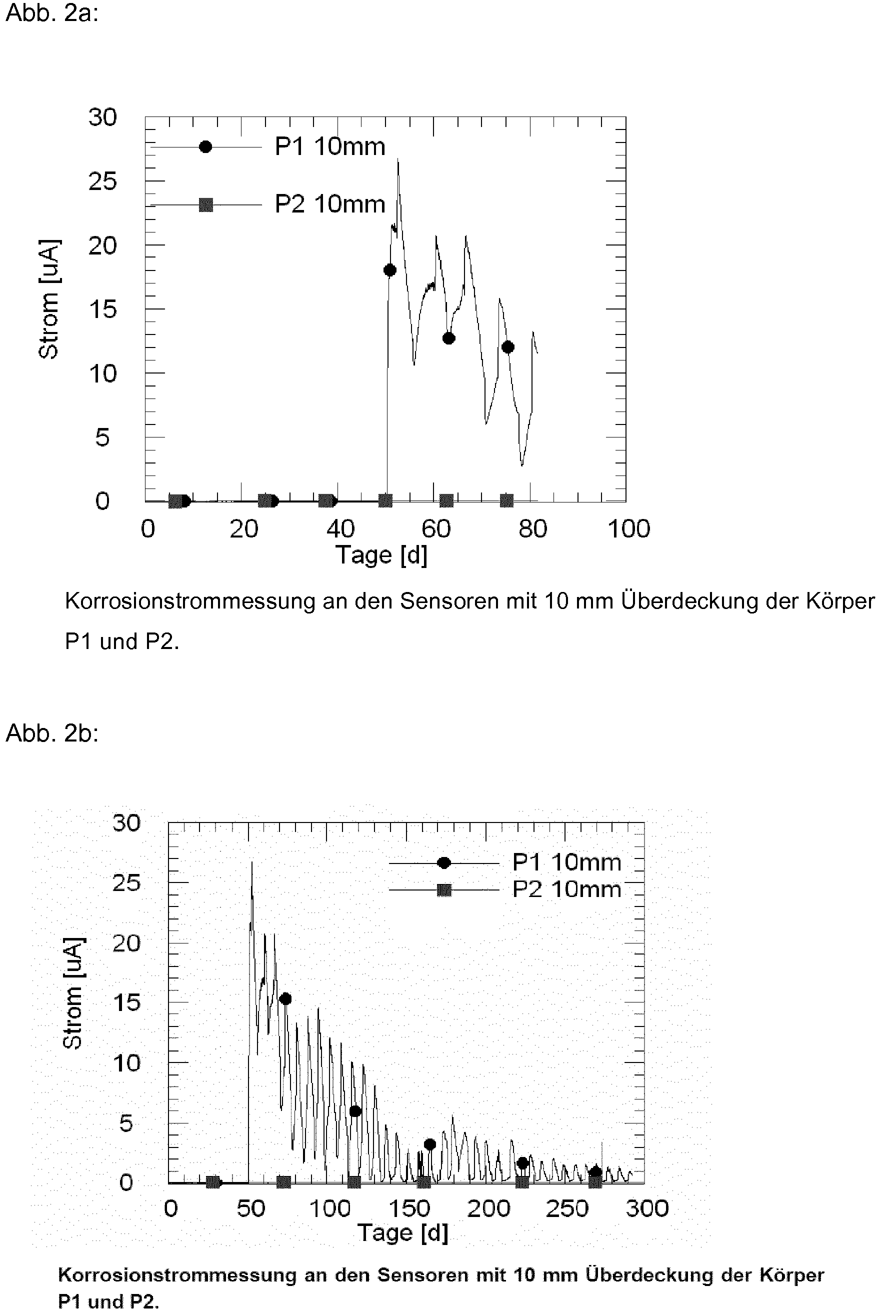

## Patentansprüche

1. In Wasser dispergierbare, redispergierbare oder lösliche Mischung, basierend auf
(i) mindestens einem in Wasser löslichen organischen Polymer und
(ii) mindestens einer Organosiliciumverbindung mit mindestens einer Si-O-Si Bindung,
wobei der Gehalt an organischem Polymer (i) 40 bis 80 Gew.-% beträgt und auf die Summe von organischem Polymer (i) und Organosiliciumverbindung (ii) bezogen ist,
wobei die Organosiliciumverbindung ein Oligomerengemisch von Alkylalkoxysiloxanen ist, das Oligomerengemisch 50 bis 100 Gew.-% an Alkylalkoxysiloxanen enthält und diese im Wesentlichen einen Oligomerisierungsgrad von 2 bis 20 aufweisen, und wobei das Oligomerengemisch an Alkylalkoxysiloxanen der Summenformel I
(R")Si(OR"')xOy (I),
wobei Gruppen R" gleich oder verschieden sind und R" eine lineare, verzweigte oder cyclische Alkylgruppe mit 1 bis 18 C-Atomen darstellt, vorzugsweise Methyl, Ethyl, Propyl, Hexyl, Octyl, Hexadecyl, Gruppen R'" gleich oder verschieden sind und R'" für einen Wasserstoff oder eine lineare oder verzweigte Alkylgruppe mit 1 bis 4 C-Atomen steht, vorzugsweise Methyl, Ethyl, Propyl, und 1,0 < x < 2,0 und 0,5 < y < 1,0 sind mit der Maßgabe (2y + x) = 3, genügt.

2. Mischung nach Anspruch 1, wobei das für die Herstellung der Mischung eingesetzte Oligomerengemisch von Alkylalkoxysiloxanen 70 bis 100 Gew.-%, insbesondere von 80 bis 99 Gew.-%, Alkylalkoxysiloxane mit einem Oligomerisierungsgrad 2 bis 10, insbesondere von 3 bis 6, aufweist.

3. Mischung nach Anspruch 1 oder 2, wobei das in Wasser lösliche organische Polymer ein synthetisch hergestelltes Polymer ist, insbesondere in Form eines modifizierten und/oder unmodifizierten Polyvinylalkohols mit einem Hydrolysegrad von 70 bis 100 Mol-% und einer Höpplerviskosität als 4%ige wässrige Lösung von 1 bis 50 mPas (gemessen bei 20°C nach DIN 53015) und/oder Polyvinylpyrrolidon, Polyacrylate, Polymethylacrylate, Polyalkylenoxide und/oder Polymaleinate.

4. Mischung nach mindestens einem der Ansprüche 1 bis 3, wobei das in Wasser lösliche organische Polymer ein natürliches und/oder synthetisch hergestelltes Biopolymer darstellt, das gegebenenfalls synthetisch modifiziert ist, und insbesondere Stärke, Stärkeether, Dextrine, Celluloseether, Casein, und/oder Soja-Protein ist.

5. Mischung nach mindestens einem der Ansprüche 1 bis 4, wobei die in Wasser dispergierbare oder redispergierbare Mischung, wenn in Wasser dispergiert bzw. redispergiert, eine mittlere Partikelgröße von 0,1 bis 50 µm, insbesondere von 0,2 bis 30 µm aufweist.

6. Mischung nach mindestens einem der Ansprüche 1 bis 5, wobei die in Wasser dispergierbare bzw. redispergierbare oder lösliche Mischung eine mittlere Partikelgröße von 20 bis 500 µm, insbesondere von 50 bis 250 µm besitzt.

7. Mischung nach mindestens einem der Ansprüche 1 bis 6, wobei die Mischung noch weitere Zusatzstoffe enthält, insbesondere Hydrophobierungsmittel, wie Fettsäuren sowie deren Salze und Ester, Fettalkohole, Silane, Luftporenbildner, Netzmittel, Entschäumer, Emulgatoren, Filmbildehilfsmittel, Abbinde- und Erstarrungsbeschleuniger, Abbindeverzögerer, Verdickungsmittel, Dispergiermittel, Rheologiesteuerungsadditive. wie Zementverflüssiger, Polycarboxylate, Polycarboxylatether, Polyacrylamide sowie Verdicker, Korrosionsinhibitoren, wie Alkylammoniumbenzoate, Aminoalkohole, Glukonsäure und/oder deren Alkali- und Erdalkalisalze, Wasserretentionsmittel, Cellulosefasern sowie Celluloseether, Stärkeether, Guarether, Additive zur Reduktion von Ausblühungen, der Sedimentation und/oder des Ausschwimmens, Füllstoffe und Additive zur Reduktion der Pulververblockung sowie filmbildende, wasserunlösliche Dispersionspulver und filmbildende Polymerdispersionen.

8. Verfahren zur Herstellung einer Mischung nach mindestens einem der Ansprüche 1 bis 7, wobei man
- in einem ersten Schritt mindestens 10 Gew.-% mindestens eines organischen Polymers gemäß (i) bezogen auf die Gesamtmenge an Organosiliciumverbindungen, mit mindestens einer Organosiliciumverbindung gemäß (ii) vermischt, die gegebenenfalls restliche Menge an organischem Polymer während und/oder nach dem Dispergieren zugibt, optional weitere Zusatzstoffe vor, während und/oder nach dem Dispergieren zusetzt und
- in einem zweiten Schritt die im ersten Schritt erhaltene Dispersion trocknet, wobei man während und/oder nach der Trocknung weitere Zusatzstoffe zugegeben kann.

9. Verfahren nach Anspruch 8, wobei man im zweiten Schritt zur Trocknung eine Sprühtrocknung, Gefriertrocknung, Fliessbetttrocknung, Walzentrocknung, Granulation oder eine Schnelltrocknung durchführt.

10. Verwendung einer Mischung nach mindestens einem der Ansprüche 1 bis 7 oder hergestellt nach Anspruch 8 oder 9 in und/oder auf Massen enthaltend mindestens ein mineralisches Bindemittel, insbesondere ein hydraulisch abbindendes Bindemittel, zum Schutz von natürlichen und/oder künstlich hergestellten mineralischen Baustoffen vor Korrosion.

11. Verwendung nach Anspruch 10, wobei die mineralischen Baustoffe mit Metall in Berührung stehen, Metall umhüllen oder einschließen, und wobei die Massen enthaltend mindestens ein mineralisches Bindemittel aus der Reihe Beton, insbesondere Stahlbeton, Blähbeton, Gasbeton, Faserbeton, Porenbeton, Stahlfaserbeton, Spritzbeton, Unterwasserbeton, Walzbeton, Schleuderbeton, Vakuumbeton, selbstverdichtender Beton (SCC), Estrichbeton, Splittbeton, Drainbeton, hochfester und ultrahochfester Beton, Glasschaumbeton, Terrakotta, Gips- und/ oder Kalk- und/oder Zement-Putze, Reparaturmörtel, Vollwärmeschutzmörtel, Fugenkleber, Fliesenkleber, Nivelliermassen, Spachtelmassen, Dichtungsschlämmen, Pulverfarben sowie Betonanstriche ausgewählt sind.

12. Verwendung einer Mischung nach mindestens einem der Ansprüche 1 bis 7 oder hergestellt nach Anspruch 8 oder 9 für den Schutz von Metall vor Korrosion, wobei das Metall von mineralischem Baustoff umgeben ist.

13. Verwendung einer Mischung nach mindestens einem der Ansprüche 1 bis 7 oder hergestellt nach Anspruch 8 oder 9 für den Schutz von Bausteinen, Bauteilen, Bauwerken vor Korrosion.

14. Verwendung einer Mischung nach mindestens einem der Ansprüche 1 bis 7 oder hergestellt nach Anspruch 8 oder 9 als Mittel oder in Zubereitungen zur Steinverfestigung.

15. Verwendung einer Mischung nach mindestens einem der Ansprüche 1 bis 7 oder hergestellt nach Anspruch 8 oder 9 zur Beschichtung von Kabeln, insbesondere zur Isolierung von Kabeln und/oder zur Hydrophobierung von Kabeloberflächen.

16. Verwendung von mindestens einer in Wasser dispergierbaren, redispergierbaren oder löslichen Mischung nach einem der Ansprüche 1 bis 7, und Wasser enthaltenden Zusammensetzung für den Schutz von Substraten vor Korrosion.

17. Verwendung nach Anspruch 16, wobei die Substrate Metall sowie natürliche und/oder hergestellte mineralische Baustoffe sind, wobei Metall bevorzugt von mineralischen Baustoffen umgeben ist und die Baustoffe bevorzugt Bausteine, Bauteile, Mörtel, und/oder Beton sind.

18. Verwendung nach Anspruch 17, wobei die Mischung oder die Zusammensetzung während der Herstellung der mineralischen Baustoffe zugesetzt oder in Kontakt gebracht wird.

19. Zubereitung, die auf Wasser und mindestens einer Mischung nach einem der Ansprüche 1 bis 7 bzw. hergestellt nach Anspruch 8 oder 9 basiert.

20. Zubereitung oder Mittel enthaltend mindestens eine Mischung nach einem der Ansprüche 1 bis 7 bzw. hergestellt nach Anspruch 8 oder 9, wobei die Mischung in einer Konzentration von 0,1 bis 10 Gew.-%, bezogen auf den jeweiligen Trockengehalt, in der Zubereitung oder in dem Mittel enthalten ist, zur Verwendung nach mindestens einem der Ansprüche 10 bis 15.

## Claims

1. Water-dispersible, -redispersible or -soluble mixture based on
(i) at least one water-soluble organic polymer and
(ii) at least one organosilicon compound having at least one Si-O-Si bond,
the content of organic polymer (i) being from 40 to 80% by weight and being based on the sum of organic polymer (i) and organosilicon compound (ii),
the organosilicon compound being an oligomer mixture of alkylalkoxysiloxanes, the oligomer mixture containing from 50 to 100% by weight of alkylalkoxysiloxanes and these substantially having a degree of oligomerization of from 2 to 20, and
the oligomer mixture of alkylalkoxysiloxanes satisfying the empirical formula I
(R")Si(OR'")ₓO_{y} (I),
groups R" being identical or different and R" being a linear, branched or cyclic alkyl group having 1 to 18 C atoms, preferably methyl, ethyl, propyl, hexyl, octyl, hexadecyl, groups R'" being identical or different and R'" being a hydrogen or a linear or branched alkyl group having 1 to 4 C atoms, preferably methyl, ethyl, propyl, and 1.0 < x < 2.0 and 0.5 < y < 1.0, with the proviso that (2y + x) = 3.

2. Mixture according to Claim 1, the oligomer mixture of alkylalkoxysiloxanes which is used for the preparation of the mixture comprising from about 70 to 100% by weight, in particular from 80 to 99% by weight, of alkylalkoxysiloxanes having a degree of oligomerization of from 2 to 10, in particular from 3 to 6.

3. Mixture according to Claim 1 or 2, the water-soluble organic polymer being a synthetically prepared polymer, in particular in the form of a modified and/or unmodified polyvinyl alcohol having a degree of hydrolysis of from 70 to 100 mol% and a Höppler viscosity, as a 4% strength aqueous solution, of from 1 to 50 mPa·s (measured at 20°C according to DIN 53015) and/or polyvinylpyrrolidone, polyacrylates, polymethyl acrylates, polyalkylene oxides and/or polymaleates.

4. Mixture according to at least one of Claims 1 to 3, the water-soluble organic polymer being a natural and/or synthetically prepared biopolymer which, if desired, is synthetically modified, and being in particular starch, starch ether, dextrins, cellulose ether, casein and/or soybean protein.

5. Mixture according to at least one of Claims 1 to 4, the water-dispersible or -redispersible mixture, when it is dispersed or redispersed in water, having a mean particle size of from 0.1 to 50 µm, in particular from 0.2 to 30 µm.

6. Mixture according to at least one of Claims 1 to 5, the water-dispersible or -redispersible or -soluble mixture having a mean particle size of from 20 to 500 µm, in particular from 50 to 250 µm.

7. Mixture according to at least one of Claims 1 to 6, the mixture also containing further additives, in particular water repellents, such as fatty acids and their salts and esters, fatty alcohols, silanes, air-entraining agents, wetting agents, antifoams, emulsifiers, film formation auxiliaries, setting and solidification accelerators, setting retardants, thickeners, dispersants, rheology control additives, such as cement plasticizers, polycarboxylates, polycarboxylate ethers, polyacrylamides and thickeners, corrosion inhibitors, such as alkylammonium benzoates, aminoalcohols, gluconic acid and/or their alkali metal and alkaline earth metal salts, water retention agents, cellulose fibers and cellulose ether, starch ether, guar ether, additives for reducing efflorescence, sedimentation and/or floating, fillers and additives for reducing powder blocking and film-forming, water-insoluble dispersion powders and film-forming polymer dispersions.

8. Process for the preparation of a mixture according to at least one of Claims 1 to 7, in which
- in a first step, at least 10% by weight of at least one organic polymer dissolved in water and according to (i), based on the total amount of organosilicon compounds, are mixed with at least one organosilicon compound according to (ii), any remaining amount of organic polymer being added during and/or after the dispersing, optionally further additives being added before, during and/or after the dispersing, and
- in a second step, the dispersion obtained in the first step is dried, it being possible to add further additives during and/or after the drying.

9. Process according to Claim 8, spray drying, freeze drying, fluid-bed drying, drum drying, granulation or high-speed drying being carried out in the second step for drying.

10. Use of a mixture according to at least one of Claims 1 to 7 or prepared according to Claim 8 or 9 in and/or on materials containing at least one mineral binder, in particular a hydraulically setting binder, for protecting natural and/or synthetically produced mineral building materials from corrosion.

11. Use according to Claim 10, the mineral building materials being in contact with metal or surrounding or enclosing metal, and the materials containing at least one mineral binder from the series consisting of concrete, in particular reinforced concrete, expanded concrete, gas concrete, fiber concrete, cellular concrete, steel fiber concrete, air-placed concrete, underwater concrete, rolled concrete, spun concrete, vacuum concrete, self-compacting concrete (SCC), floor-topping concrete, chip concrete, drain concrete, high-strength and ultra high-strength concrete, glass foam concrete, terracotta, gypsum and/or lime and/or cement renders, repair mortar, full thermal protection mortar, joint adhesive, tile adhesive, leveling compounds, filling compounds, slurry seal-coatings, powder paints and concrete paints.

12. Use of a mixture according to at least one of Claims 1 to 7 or prepared according to Claim 8 or 9 for protecting metal from corrosion, the metal being surrounded by mineral building material.

13. Use of a mixture according to at least one of Claims 1 to 7 or prepared according to Claim 8 or 9 for protecting building blocks, components, structures from corrosion.

14. Use of a mixture according to at least one of Claims 1 to 7 or prepared according to Claim 8 or 9 as a composition in formulations for consolidating stone.

15. Use of a mixture according to at least one of Claims 1 to 7 or prepared according to Claim 8 or 9 for coating cables, in particular for insulating cables and/or for the hydrophobization of cable surfaces.

16. Use of at least one water-dispersible, - redispersible or -soluble mixture according to any of Claims 1 to 7, and water containing a composition for protecting substrates from corrosion.

17. Use according to Claim 16, the substrates being metal and natural and/or manufactured mineral building materials, metal preferably being surrounded by mineral building materials and the building materials preferably being building blocks, components, water and/or concrete.

18. Use according to Claim 17, the mixture or the composition being added or brought into contact during the production of the mineral building materials.

19. Formulation which is based on water and at least one mixture according to any of Claims 1 to 7 or prepared according to Claim 8 or 9.

20. Formulation or composition containing at least one mixture according to any of Claims 1 to 7 or prepared according to Claim 8 or 9, the mixture being present in a concentration of from 0.1 to 10% by weight, based on the respective solids content, in the formulation or in the composition, for use according to at least one of Claims 10 to 15.

## Revendications

1. Mélange dispersible, redispersible ou soluble dans l'eau, à base de
(i) au moins un polymère organique soluble dans l'eau et
(ii) au moins un composé organosilicié présentant au moins une liaison Si-O-Si,
la teneur en polymère organique (i) étant de 40 à 80% en poids et se rapportant à la somme de polymère organique (i) et de composé organosilicié (ii),
le composé organosilicié étant un mélange d'oligomères d'alkylalcoxysiloxanes, le mélange d'oligomères contenant 50 à 100% en poids d'alkylalcoxysiloxanes et ceux-ci présentant essentiellement un degré d'oligomérisation de 2 à 20 et le mélange d'oligomères d'alkylalcoxysiloxanes satisfaisant à la formule brute I
(R")Si(OR"')ₓO_{y} (I),
les groupes R" étant identiques ou différents et R" représentant un groupe alkyle linéaire, ramifié ou cyclique comprenant 1 à 18 atomes de carbone, de préférence méthyle, éthyle, propyle, hexyle, octyle, hexadécyle, les groupes R"' étant identiques ou différents et R"' représentant hydrogène ou un groupe alkyle linéaire ou ramifié comprenant 1 à 4 atomes de carbone, de préférence méthyle, éthyle, propyle et 1,0 < x < 2,0 et 0,5 < y < 1,0 à condition que (2y + x) = 3.

2. Mélange selon la revendication 1, le mélange d'oligomères d'alkylalcoxysiloxanes utilisé pour la préparation du mélange présentant 70 à 100% en poids, en particulier 80 à 99% en poids, d'alkylalcoxysiloxanes présentant un degré d'oligomérisation de 2 à 10, en particulier de 3 à 6.

3. Mélange selon la revendication 1 ou 2, le polymère organique soluble dans l'eau étant un polymère préparé par voie synthétique, en particulier sous forme d'un poly((alcool vinylique) modifié et/ou non modifié présentant un degré d'hydrolyse de 70 à 100% en mole et une viscosité selon Höppler, sous forme d'une solution aqueuse à 4% en poids, de 1 à 50 mPa.s (mesurée à 20°C selon la norme DIN 53015) et/ou une polyvinylpyrrolidone, des polyacrylates, des poly(acrylates de méthyle), des poly(oxydes d'alkylène) et/ou des polymaléinates.

4. Mélange selon au moins l'une quelconque des revendications 1 à 3, le polymère organique soluble dans l'eau étant un biopolymère naturel et/ou préparé par voie synthétique, qui est le cas échéant modifié par voie synthétique, et en particulier un amidon, un éther d'amidon, une dextrine, un éther de cellulose, de la caséine et/ou une protéine de soja.

5. Mélange selon au moins l'une quelconque des revendications 1 à 4, le mélange dispersible ou redispersible dans l'eau, lorsqu'il est dispersé ou redispersé dans l'eau, présentant une grosseur moyenne de particule de 0,1 à 50 µm, en particulier de 0,2 à 30 µm.

6. Mélange selon au moins l'une quelconque des revendications 1 à 5, le mélange dispersible ou redispersible ou soluble dans l'eau présentant une grosseur moyenne de particule de 20 à 500 µm, en particulier de 50 à 250 µm.

7. Mélange selon au moins l'une quelconque des revendications 1 à 6, le mélange contenant encore d'autres additifs, en particulier des agents d'hydrofugation, tels que les acides gras ainsi que leurs sels et leurs esters, les alcools gras, les silanes, les agents de formation de pores d'air, les mouillants, les antimousses, les émulsifiants, les adjuvants filmogènes, les accélérateurs de prise et de solidification, les retardateurs de prise, les épaississants, les dispersants, les additifs de régulation de la rhéologie, tels que les fluidifiants de ciment, les polycarboxylates, les polycarboxylate-éthers, les polyacrylamides ainsi que les épaississants, les inhibiteurs de corrosion, tels que les benzoates d'alkyle ammonium, les aminoalcools, l'acide gluconique et/ou ses sels de métal alcalin et alcalino-terreux, les agents de rétention d'eau, les fibres de cellulose ainsi que les éthers de cellulose, les éthers d'amidon, les éthers de guar, les additifs pour la réduction des efflorescences, de la sédimentation et/ou du lessivage, les charges et les additifs pour la réduction de l'agglomération de la poudre ainsi que les poudres de dispersion filmogènes, insolubles dans l'eau et les dispersions polymères filmogènes.

8. Procédé pour la préparation d'un mélange selon au moins l'une quelconque des revendications 1 à 7, dans lequel
- dans une première étape, on mélange au moins 10% en poids d'au moins un polymère organique selon (i), par rapport à la quantité totale de composés organosiliciés, avec au moins un composé organosilicié selon (ii), on ajoute le cas échéant la quantité résiduelle de polymère organique pendant et/ou après la dispersion, on ajoute éventuellement d'autres additifs avant, pendant et/ou après la dispersion et
- dans une deuxième étape, on sèche la dispersion obtenue dans la première étape, d'autres additifs pouvant être ajoutés pendant et/ou après le séchage.

9. Procédé selon la revendication 8, un séchage par pulvérisation, une lyophilisation, un séchage en lit fluidisé, un séchage par cylindre, une granulation ou un séchage rapide étant réalisé(e) dans la deuxième étape pour le séchage.

10. Utilisation d'un mélange selon au moins l'une quelconque des revendications 1 à 7 ou préparé selon la revendication 8 ou 9 dans et/ou sur des masses contenant au moins un liant minéral, en particulier un liant à prise hydraulique, pour la protection de matériaux de construction minéraux naturels et/ou préparés par voie synthétique contre la corrosion.

11. Utilisation selon la revendication 10, les matériaux de constructions minéraux étant en contact avec un métal, entourant ou renfermant un métal et les masses contenant au moins un liant minéral étant choisies dans la série constituée par le béton, en particulier le béton armé, le béton expansé, le béton cellulaire, le béton fibreux, le béton poreux, le béton à fibres d'acier, le béton projeté, le béton sous-marin, le béton roulé, le béton centrifugé, le béton sous vide, le béton autocompactant (SCC), le béton pour chape, le béton gravillonné, le béton drainant, le béton hautement solide et ultra hautement solide, le béton de mousse de verre, la terre cuite, les enduits à base de gypse et/ou de chaux et/ou de ciment, le mortier de réparation, le mortier isolant thermique, la colle à joint, la colle à carrelage, les masses de nivellement, les mastics, les badigeons d'étanchéité, les peintures en poudre ainsi que les revêtements en béton.

12. Utilisation d'un mélange selon au moins l'une quelconque des revendications 1 à 7 ou préparé selon la revendication 8 ou 9 pour la protection de métal contre la corrosion, le métal étant entouré d'un matériau de construction minéral.

13. Utilisation d'un mélange selon au moins l'une quelconque des revendications 1 à 7 ou préparé selon la revendication 8 ou 9 pour la protection d'éléments de construction, d'éléments structuraux de construction et de constructions contre la corrosion.

14. Utilisation d'un mélange selon au moins l'une quelconque des revendications 1 à 7 ou préparé selon la revendication 8 ou 9 comme agent ou dans des préparations de solidification de briques.

15. Utilisation d'un mélange selon au moins l'une quelconque des revendications 1 à 7 ou préparé selon la revendication 8 ou 9 pour le revêtement de câbles, en particulier pour l'isolation de câbles et/ou pour l'hydrofugation de surface de câbles.

16. Utilisation d'une composition contenant au moins un mélange dispersible, redispersible ou soluble dans l'eau selon l'une quelconque des revendications 1 à 7 et de l'eau pour la protection de substrats contre la corrosion.

17. Utilisation selon la revendication 16, les substrats étant un métal et/ou des matériaux de construction minéraux naturels et/ou fabriqués, le métal étant de préférence entouré par les matériaux de construction minéraux et les matériaux de construction étant de préférence des briques, des éléments de construction, un mortier et/ou un béton.

18. Utilisation selon la revendication 17, le mélange ou la composition étant ajouté(e) aux matériaux de construction minéraux ou mis(e) en contact avec ceux-ci pendant leur préparation.

19. Préparation, à base d'eau et d'au moins un mélange selon l'une quelconque des revendications 1 à 7 ou préparé selon la revendication 8 ou 9.

20. Préparation ou agent contenant au moins un mélange selon l'une quelconque des revendications 1 à 7 ou préparé selon la revendication 8 au 9, le mélange étant contenu en une concentration de 0,1 à 10% en poids, par rapport à la teneur en matière sèche respective, dans la préparation ou dans l'agent, pour une utilisation selon au moins l'une quelconque des revendications 10 à 15.
